# EUROPEAN PATENT APPLICATION

(11) **EP 4 611 432 A1**
(43) Date of publication of application: **03.09.2025**
(21) Application number: 23884866.7
(22) Date of filing: 30.10.2023
(51) Int. Cl.: H04W 36/00, H04W 52/02, H04W 76/28, H04W 72/12

(54) **COMMUNICATION METHOD AND RELATED APPARATUS**

(30) Priority: 03.11.2022 CN 202211371360
(71) Applicant: Huawei Technologies Co., Ltd., Shenzhen, Guangdong 518129 (CN)
(72) Inventor: HUA, Meng, Shenzhen, Guangdong 518129 (CN); GAO, Fei, Shenzhen, Guangdong 518129 (CN); PENG, Jinlin, Shenzhen, Guangdong 518129 (CN); WANG, Yi, Shenzhen, Guangdong 518129 (CN)
(74) Representative: Goddar, Heinz J.
(86) International application number: PCT/CN2023/127877
(87) International publication number: WO 2024/093936

(57) **Abstract**

This application provides a communication method and a related apparatus. The method includes: monitoring a first DCI format, where the first DCI format is usable for scheduling data transmission of two or more cells; and stopping, in response to a case in which a first cell enters an inactive state or a dormant state, monitoring the first DCI format, where the first cell is a cell that carries the first DCI format, or the first cell belongs to a first scheduled cell group, where the first scheduled cell group is a set of all cells capable of being scheduled in the first DCI format. According to the technical solutions provided in this application, signaling overheads for cell scheduling can be reduced, and cell scheduling flexibility can be improved.

## Description

This application claims priority to Chinese Patent Application No. 202211371360.3, filed with the China National Intellectual Property Administration on November 3, 2022 and entitled "COMMUNICATION METHOD AND RELATED APPARATUS", which is incorporated herein by reference in its entirety.

### TECHNICAL FIELD

This application relates to the field of wireless communication technologies, and in particular, to a communication method and a related apparatus.

### BACKGROUND

A terminal device supports a multi-cell scheduling downlink control information (downlink control information, DCI) format (format) and a single-cell scheduling DCI format. Compared with the single-cell scheduling DCI format, the multi-cell scheduling DCI format includes some fields in scheduling that may be shared by a plurality of cells, to reduce signaling overheads.

However, for the multi-cell scheduling DCI format, if one or more cells in a scheduled cell group of the multi-cell scheduling DCI format are deactivated or set to a dormant state, data scheduling cannot be performed on these cells. The scheduled cell group may be a set of all cells that can be scheduled in the multi-cell scheduling DCI format. If the multi-cell scheduling DCI format is still used, there are problems such as high DCI signaling overheads and low scheduling flexibility. Therefore, how to reduce signaling overheads for the cell scheduling DCI format and how to improve cell scheduling flexibility are problems to be urgently resolved.

### SUMMARY

Embodiments of this application provide a communication method and a related apparatus, to reduce signaling overheads for a cell scheduling DCI format and improve cell scheduling flexibility.

According to a first aspect, this application provides a communication method. The method may be applied to a terminal device, or may be applied to an apparatus (for example, a chip, a chip system, or a circuit) in the terminal device or an apparatus that can be used in collaboration with the terminal device. The following provides descriptions by using an example in which the method is applied to the terminal device. The method may include: The terminal device monitors a first DCI format, where the first DCI format is usable for scheduling data transmission of two or more cells. The terminal device stops, in response to a case in which a first cell enters an inactive state or a dormant state, monitoring the first DCI format, where the first cell is a cell that carries the first DCI format, or the first cell belongs to a first scheduled cell group, where the first scheduled cell group is a set of all cells capable of being scheduled in the first DCI format.

In the solution provided in this application, for the first DCI format, when a cell in the first scheduled cell group of the first DCI format is deactivated or set to a dormant state, data scheduling cannot be performed on the cell. The terminal device and a network device may switch a DCI format based on a status of the first cell. For example, the terminal device may monitor the first DCI format; and when the first cell in the first scheduled cell group corresponding to the first DCI format enters the inactive state or the dormant state, the terminal device may stop monitoring the first DCI format. This can reduce signaling overheads for a cell scheduling DCI format and improve cell scheduling flexibility, and is different from a solution in which the first DCI format is still used and consequently there are problems such as high DCI signaling overheads and low scheduling flexibility.

In a possible implementation, the first cell belongs to the first scheduled cell group; and before the stopping monitoring the first DCI format, the communication method further includes: determining that a first condition is met, where the first condition includes either or both of the following: there are N or more cells in an inactive state or a dormant state in the first scheduled cell group, where N is a positive integer greater than or equal to 2; or there are K or fewer cells in an active state or a non-dormant state in the first scheduled cell group, where K is a positive integer greater than or equal to 1.

In the solution provided in this application, on the basis of responding to the case in which the first cell enters the inactive state or the dormant state, the terminal device may stop, when the first condition is met, monitoring the first DCI format. The first condition is added, so that accuracy of switching the DCI format can be improved.

In a possible implementation, the first cell belongs to the first scheduled cell group; and before the stopping monitoring the first DCI format, the communication method further includes: determining that a second condition is met, where the second condition includes any one or more of the following: there is at least one cell in an inactive state or a dormant state in any specific second scheduled cell group; there are N or more cells in an inactive state or a dormant state in any specific second scheduled cell group, where N is a positive integer greater than or equal to 2; or there are K or fewer cells in an active state or a non-dormant state in any second scheduled cell group, where K is a positive integer greater than or equal to 1, where the first DCI format includes a first indicator field, the first indicator field has M values, each value in the M values indicates one second scheduled cell group, each second scheduled cell group includes one or more scheduled cells, and the specific second scheduled cell group is a second scheduled cell group with a largest quantity of scheduled cells in M second scheduled cell groups, where M is a positive integer greater than or equal to 1.

In the solution provided in this application, on the basis of responding to the case in which the first cell enters the inactive state or the dormant state, the terminal device may stop, when the second condition is met, monitoring the first DCI format. The second condition is added, so that accuracy of switching the DCI format can be improved.

In a possible implementation, the communication method further includes: starting to monitor a second DCI format, where one piece of DCI in the second DCI format is for scheduling data transmission of only one cell, the second DCI format is usable for scheduling a second cell, and the second cell belongs to the first scheduled cell group.

In the solution provided in this application, the terminal device stops monitoring the first DCI format, and starts to monitor the second DCI format. This may be understood as: The first cell enters the inactive state or the dormant state, and the terminal device switches from monitoring the multi-cell scheduling DCI format to monitoring a single-cell scheduling DCI format. For the first DCI format, when a cell in the first scheduled cell group of the first DCI format is deactivated or set to a dormant state, data scheduling cannot be performed on the cell. The terminal device switches to monitoring the second DCI format. This can reduce the signaling overheads for the cell scheduling DCI format and improve the cell scheduling flexibility, and is different from the solution in which the first DCI format is still used and consequently there are problems such as high DCI signaling overheads and low scheduling flexibility. Monitoring the first DCI format by the terminal device is more complex than monitoring the second DCI format. Therefore, the switching performed by the terminal device from monitoring first DCI to monitoring the second DCI format further allows the terminal device to save energy.

In a possible implementation, the communication method further includes: starting, in response to a case in which the first cell enters an active state or a non-dormant state, to monitor the first DCI format.

In the solution provided in this application, the terminal device may switch the DCI format based on the status of the first cell. For example, the terminal device may start, in response to the case in which the first cell enters the active state or the non-dormant state, to monitor the first DCI format, so that some fields in scheduling may be shared by a plurality of cells. This can reduce the signaling overheads for the cell scheduling DCI format and improve the cell scheduling flexibility.

In a possible implementation, the communication method further includes: starting, in response to a case in which a third cell enters an active state or a non-dormant state and when determining that the first condition is not met, to monitor the first DCI format, where the third cell is a cell in an inactive state or a dormant state in the first scheduled cell group.

In a possible implementation, the communication method further includes: starting, in response to a case in which a fourth cell enters an active state or a non-dormant state and when determining that the second condition is not met, to monitor the first DCI format, where the fourth cell is a cell in an inactive state or a dormant state in the first scheduled cell group.

In a possible implementation, the communication method further includes: stopping monitoring the second DCI format.

In a possible implementation, the communication method further includes: sending indication information to a network device, where the indication information indicates that the terminal device does not support simultaneous monitoring of the first DCI format and the second DCI format.

In a possible implementation, the first cell belongs to the first scheduled cell group, and the cell that carries the first DCI format is different from a cell that carries the second DCI format.

In the solution provided in this application, in a possible implementation, both the first cell and the second cell belong to the first scheduled cell group, and the cell that carries the first DCI format is different from the cell that carries the second DCI format. To be specific, when the first cell enters the inactive state or the dormant state, another scheduled cell is scheduled. For example, a DCI format for the second cell is switched from the first DCI format to the second DCI format, and a scheduling cell (namely, the cell that carries the first DCI format or the cell that carries the second DCI format) for the second cell may change.

According to a second aspect, this application provides a communication method. The method may be applied to a network device, or may be applied to an apparatus (for example, a chip, a chip system, or a circuit) in the network device or an apparatus that can be used in collaboration with the network device. The following provides descriptions by using an example in which the method is applied to the network device. The method may include: The network device sends a first DCI format to a terminal device, where the first DCI format is usable for scheduling data transmission of two or more cells. The network device stops, in response to a case in which a first cell enters an inactive state or a dormant state, sending the first DCI format to the terminal device, where the first cell is a cell that carries the first DCI format, or the first cell belongs to a first scheduled cell group, where the first scheduled cell group is a set of all cells capable of being scheduled in the first DCI format.

In the solution provided in this application, for the first DCI format, when a cell in the first scheduled cell group of the first DCI format is deactivated or set to a dormant state, data scheduling cannot be performed on the cell. The terminal device and the network device may switch a DCI format based on a status of the first cell. For example, the network device may stop, in response to the case in which the first cell enters the inactive state or the dormant state, sending the first DCI format to the terminal device. This can reduce signaling overheads for a cell scheduling DCI format and improve cell scheduling flexibility, and is different from a solution in which the first DCI format is still used and consequently there are problems such as high DCI signaling overheads and low scheduling flexibility.

It should be understood that the second aspect may be performed by the network device, and specific content of the second aspect corresponds to content of the first aspect. For corresponding features of the second aspect and beneficial effects achieved in the second aspect, refer to descriptions of the first aspect. To avoid repetition, detailed descriptions are properly omitted herein.

In a possible implementation, the first cell belongs to the first scheduled cell group; and before the stopping sending the first DCI format to the terminal device, the communication method further includes: determining that a first condition is met, where the first condition includes either or both of the following: there are N or more cells in an inactive state or a dormant state in the first scheduled cell group, where N is a positive integer greater than or equal to 2; or there are K or fewer cells in an active state or a non-dormant state in the first scheduled cell group, where K is a positive integer greater than or equal to 1.

In a possible implementation, the first cell belongs to the first scheduled cell group; and before the stopping sending the first DCI format to the terminal device, the communication method further includes: determining that a second condition is met, where the second condition includes any one or more of the following: there is at least one cell in an inactive state or a dormant state in any specific second scheduled cell group; there are N or more cells in an inactive state or a dormant state in any specific second scheduled cell group, where N is a positive integer greater than or equal to 2; or there are K or fewer cells in an active state or a non-dormant state in any second scheduled cell group, where K is a positive integer greater than or equal to 1, where the first DCI format includes a first indicator field, the first indicator field has M values, each value in the M values indicates one second scheduled cell group, each second scheduled cell group includes one or more scheduled cells, and the specific second scheduled cell group is a second scheduled cell group with a largest quantity of scheduled cells in M second scheduled cell groups, where M is a positive integer greater than or equal to 1.

In a possible implementation, the communication method further includes: sending a second DCI format to the terminal device, where one piece of DCI in the second DCI format is for scheduling data transmission of only one cell, the second DCI format is usable for scheduling a second cell, and the second cell belongs to the first scheduled cell group.

In a possible implementation, the communication method further includes: starting, in response to a case in which the first cell enters an active state or a non-dormant state, to send the first DCI format to the terminal device.

In a possible implementation, the communication method further includes: starting, in response to a case in which a third cell enters an active state or a non-dormant state and when determining that the first condition is not met, to send the first DCI format to the terminal device, where the third cell is a cell in an inactive state or a dormant state in the first scheduled cell group.

In a possible implementation, the communication method further includes: starting, in response to a case in which a fourth cell enters an active state or a non-dormant state and when determining that the second condition is not met, to send the first DCI format to the terminal device, where the fourth cell is a cell in an inactive state or a dormant state in the first scheduled cell group.

In a possible implementation, the communication method further includes: stopping sending the second DCI format to the terminal device.

In a possible implementation, the communication method further includes: receiving indication information sent by the terminal device, where the indication information indicates that the terminal device does not support simultaneous monitoring of the first DCI format and the second DCI format.

In a possible implementation, the first cell belongs to the first scheduled cell group, and the cell that carries the first DCI format is different from a cell that carries the second DCI format.

According to a third aspect, an embodiment of this application provides a communication apparatus.

The communication apparatus may be used in a terminal device, may be used in an apparatus (for example, a chip, a chip system, or a circuit) in the terminal device, or may be used in a logical module or software that can implement all or a part of functions of the terminal device. For beneficial effects, refer to descriptions of the first aspect. Details are not described herein again. The communication apparatus has a function of implementing behavior in the method example in the first aspect. The function may be implemented by hardware, or may be implemented by hardware executing corresponding software. The hardware or the software includes one or more modules corresponding to the foregoing function.

In a possible implementation, the communication apparatus includes:
a processing unit, configured to monitor a first DCI format, where the first DCI format is usable for scheduling data transmission of two or more cells, where
the processing unit is further configured to stop, in response to a case in which a first cell enters an inactive state or a dormant state, monitoring the first DCI format, where the first cell is a cell that carries the first DCI format, or the first cell belongs to a first scheduled cell group, where the first scheduled cell group is a set of all cells capable of being scheduled in the first DCI format.

In a possible implementation, the first cell belongs to the first scheduled cell group; and before stopping monitoring the first DCI format, the processing unit is further configured to determine that a first condition is met, where the first condition includes either or both of the following: there are N or more cells in an inactive state or a dormant state in the first scheduled cell group, where N is a positive integer greater than or equal to 2; or there are K or fewer cells in an active state or a non-dormant state in the first scheduled cell group, where K is a positive integer greater than or equal to 1.

In a possible implementation, the first cell belongs to the first scheduled cell group; and before stopping monitoring the first DCI format, the processing unit is further configured to determine that a second condition is met, where the second condition includes any one or more of the following: there is at least one cell in an inactive state or a dormant state in any specific second scheduled cell group; there are N or more cells in an inactive state or a dormant state in any specific second scheduled cell group, where N is a positive integer greater than or equal to 2; or there are K or fewer cells in an active state or a non-dormant state in any second scheduled cell group, where K is a positive integer greater than or equal to 1, where the first DCI format includes a first indicator field, the first indicator field has M values, each value in the M values indicates one second scheduled cell group, each second scheduled cell group includes one or more scheduled cells, and the specific second scheduled cell group is a second scheduled cell group with a largest quantity of scheduled cells in M second scheduled cell groups, where M is a positive integer greater than or equal to 1.

In a possible implementation, the processing unit is further configured to start to monitor a second DCI format, where one piece of DCI in the second DCI format is for scheduling data transmission of only one cell, the second DCI format is usable for scheduling a second cell, and the second cell belongs to the first scheduled cell group.

In a possible implementation, the processing unit is further configured to start, in response to a case in which the first cell enters an active state or a non-dormant state, to monitor the first DCI format.

In a possible implementation, the processing unit is further configured to start, in response to a case in which a third cell enters an active state or a non-dormant state and when it is determined that the first condition is not met, to monitor the first DCI format, where the third cell is a cell in an inactive state or a dormant state in the first scheduled cell group.

In a possible implementation, the processing unit is further configured to start, in response to a case in which a fourth cell enters an active state or a non-dormant state and when it is determined that the second condition is not met, to monitor the first DCI format, where the fourth cell is a cell in an inactive state or a dormant state in the first scheduled cell group.

In a possible implementation, the processing unit is further configured to stop monitoring the second DCI format.

In a possible implementation, the communication apparatus further includes:
a sending unit, configured to send indication information to a network device, where the indication information indicates that the terminal device does not support simultaneous monitoring of the first DCI format and the second DCI format.

In a possible implementation, the first cell belongs to the first scheduled cell group, and the cell that carries the first DCI format is different from a cell that carries the second DCI format.

According to a fourth aspect, an embodiment of this application provides a communication apparatus.

The communication apparatus may be used in a network device, may be used in an apparatus (for example, a chip, a chip system, or a circuit) in the network device, or may be used in a logical module or software that can implement all or a part of functions of the network device. For beneficial effects, refer to descriptions of the second aspect. Details are not described herein again. The communication apparatus has a function of implementing behavior in the method example in the second aspect. The function may be implemented by hardware, or may be implemented by hardware executing corresponding software. The hardware or the software includes one or more modules corresponding to the foregoing function.

In a possible implementation, the communication apparatus includes:
a sending unit, configured to send a first DCI format to a terminal device, where the first DCI format is usable for scheduling data transmission of two or more cells, where
the sending unit is further configured to stop, in response to a case in which a first cell enters an inactive state or a dormant state, sending the first DCI format to the terminal device, where the first cell is a cell that carries the first DCI format, or the first cell belongs to a first scheduled cell group, where the first scheduled cell group is a set of all cells capable of being scheduled in the first DCI format.

In a possible implementation, the first cell belongs to the first scheduled cell group; and the communication apparatus further includes a processing unit, configured to: before the sending unit stops sending the first DCI format to the terminal device, determine that a first condition is met, where the first condition includes either or both of the following: there are N or more cells in an inactive state or a dormant state in the first scheduled cell group, where N is a positive integer greater than or equal to 2; or there are K or fewer cells in an active state or a non-dormant state in the first scheduled cell group, where K is a positive integer greater than or equal to 1.

In a possible implementation, the first cell belongs to the first scheduled cell group; and the communication apparatus further includes a processing unit, configured to: before the sending unit stops sending the first DCI format to the terminal device, determine that a second condition is met, where the second condition includes any one or more of the following: there is at least one cell in an inactive state or a dormant state in any specific second scheduled cell group; there are N or more cells in an inactive state or a dormant state in any specific second scheduled cell group, where N is a positive integer greater than or equal to 2; or there are K or fewer cells in an active state or a non-dormant state in any second scheduled cell group, where K is a positive integer greater than or equal to 1, where the first DCI format includes a first indicator field, the first indicator field has M values, each value in the M values indicates one second scheduled cell group, each second scheduled cell group includes one or more scheduled cells, and the specific second scheduled cell group is a second scheduled cell group with a largest quantity of scheduled cells in M second scheduled cell groups, where M is a positive integer greater than or equal to 1.

In a possible implementation, the sending unit is further configured to send a second DCI format to the terminal device, where one piece of DCI in the second DCI format is for scheduling data transmission of only one cell, the second DCI format is usable for scheduling a second cell, and the second cell belongs to the first scheduled cell group.

In a possible implementation, the sending unit is further configured to start, in response to a case in which the first cell enters an active state or a non-dormant state, to send the first DCI format to the terminal device.

In a possible implementation, the sending unit is further configured to start, in response to a case in which a third cell enters an active state or a non-dormant state and when it is determined that the first condition is not met, to send the first DCI format to the terminal device, where the third cell is a cell in an inactive state or a dormant state in the first scheduled cell group.

In a possible implementation, the sending unit is further configured to start, in response to a case in which a fourth cell enters an active state or a non-dormant state and when it is determined that the second condition is not met, to send the first DCI format to the terminal device, where the fourth cell is a cell in an inactive state or a dormant state in the first scheduled cell group.

In a possible implementation, the sending unit is further configured to stop sending the second DCI format to the terminal device.

In a possible implementation, the communication apparatus further includes:
a receiving unit, configured to receive indication information sent by the terminal device, where the indication information indicates that the terminal device does not support simultaneous monitoring of the first DCI format and the second DCI format.

In a possible implementation, the first cell belongs to the first scheduled cell group, and the cell that carries the first DCI format is different from a cell that carries the second DCI format.

According to a fifth aspect, a communication apparatus is provided. The communication apparatus may be the terminal device in the foregoing method embodiments, or may be an apparatus (for example, a chip, a chip system, or a circuit) configured in the terminal device. The apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the communication method according to any one of the first aspect or the implementations of the first aspect that is performed by the terminal device or the apparatus in the terminal device in the foregoing method embodiments.

According to a sixth aspect, a communication apparatus is provided. The communication apparatus may be the network device in the foregoing method embodiments, or may be an apparatus (for example, a chip, a chip system, or a circuit) configured in the network device. The apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the communication method according to any one of the second aspect or the implementations of the second aspect that is performed by the network device or the apparatus in the network device in the foregoing method embodiments.

According to a seventh aspect, this application provides a computer-readable storage medium, where the computer-readable storage medium stores computer instructions. When a computer program or the computer instructions are run, a computer is enabled to perform the method according to any one of the first aspect and the possible implementations of the first aspect or any one of the second aspect and the possible implementations of the second aspect.

According to an eighth aspect, this application provides a computer program product including executable instructions. When the computer program product runs on a computer, the computer is enabled to perform the method according to any one of the first aspect or the possible implementations of the first aspect or any one of the second aspect or the possible implementations of the second aspect.

According to a ninth aspect, this application provides a communication apparatus. The communication apparatus includes a processor, configured to implement the method according to any one of the first aspect and the possible implementations of the first aspect or any one of the second aspect and the possible implementations of the second aspect. In a possible implementation, the communication apparatus may further include a memory, configured to store program instructions and/or data. The communication apparatus may be a chip system. The chip system may include a chip, or may include a chip and another discrete component.

According to a tenth aspect, this application provides a communication system. The communication system includes at least one terminal device and at least one network device. When running in the communication system, the at least one terminal device and the at least one network device are configured to perform any communication method according to the first aspect and the second aspect.

### BRIEF DESCRIPTION OF DRAWINGS

To describe embodiments of this application more clearly, the following briefly describes accompanying drawings used in embodiments. It is clear that persons of ordinary skill in the art can further obtain other drawings based on these accompanying drawings without creative efforts.
FIG. 1 is a diagram of a network architecture of a mobile communication system according to an embodiment of this application;
FIG. 2 is a diagram of interaction in a communication method according to an embodiment of this application;
FIG. 3 is a diagram of a DCI format switching scenario according to an embodiment of this application;
FIG. 4 is a diagram of another DCI format switching scenario according to an embodiment of this application;
FIG. 5 is a diagram of still another DCI format switching scenario according to an embodiment of this application;
FIG. 6 is a diagram of interaction in another communication method according to an embodiment of this application;
FIG. 7 is a diagram of interaction in still another communication method according to an embodiment of this application;
FIG. 8 is a diagram of interaction in still another communication method according to an embodiment of this application;
FIG. 9 is a diagram of a structure of a communication apparatus according to an embodiment of this application;
FIG. 10 is a diagram of a structure of another communication apparatus according to an embodiment of this application;
FIG. 11 is a diagram of a structure of still another communication apparatus according to an embodiment of this application; and
FIG. 12 is a diagram of a structure of a terminal device according to an embodiment of this application.

### DESCRIPTION OF EMBODIMENTS

The following describes technical solutions in embodiments of this application with reference to the accompanying drawings in embodiments of this application. The terms "system" and "network" in embodiments of this application may be used interchangeably. Unless otherwise specified, "/" indicates that associated objects are in an "or" relationship. For example, A/B may represent A or B. The term "and/or" in this application describes only an association relationship between associated objects and represents that three relationships may exist. For example, A and/or B may represent the following three cases: Only A exists, both A and B exist, and only B exists. A and B each may be singular or plural. In addition, in descriptions of this application, unless otherwise specified, "a plurality of" means two or more than two. "At least one of the following items (pieces)" or a similar expression means any combination of these items, including a single item (piece) or any combination of a plurality of items (pieces). For example, at least one of a, b, or c may represent a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that provide basically same network elements or functions. Persons skilled in the art may understand that the words such as "first" and "second" do not limit a quantity and an execution order, and do not indicate a definite difference either.

Reference to "an embodiment", "some embodiments", or the like described in embodiments of this application indicates that one or more embodiments of this application include a specific feature, structure, or characteristic described with reference to the embodiment/embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

The following first describes technical terms that may appear in embodiments of this application. Terms used in the implementations of this application are merely intended to explain specific embodiments of this application, but are not intended to limit this application. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

### (1) Carrier

The carrier (carrier) is a radio signal (namely, an electromagnetic wave) that is transmitted by a radio frequency device of a network device or a terminal device and that has a specific frequency, bandwidth, and standard, and is for carrying information in wireless mobile communication. A carrier used by the network device for sending is referred to as a downlink carrier, and a carrier used by the terminal device for sending is referred to as an uplink carrier.

### (2) Cell

The cell (cell) is described from a perspective of resource management or mobility management at a higher layer (a protocol layer, for example, a radio resource control (radio resource control, RRC) layer or a medium access control (medium access control, MAC) layer, that is above a physical layer). Coverage of each network device may be divided into one or more cells. In a new radio (new radio, NR) standard, one downlink carrier may be configured for one cell. Optionally, one uplink carrier may be further configured for the cell. For a terminal device, a cell that provides a service for the terminal device may be referred to as a serving cell. The cell in this application may alternatively be a serving cell.

### (3) Dual connectivity with carrier aggregation

To achieve high-speed transmission, carrier aggregation (carrier aggregation, CA) and dual connectivity (dual connectivity, DC) technologies are used in NR. A terminal device that supports CA and/or DC may simultaneously perform data transmission on a plurality of carriers, to improve a data transmission rate. Each carrier in the CA is also referred to as a component carrier (component carrier, CC).

In the dual connectivity, the terminal device establishes connections to a plurality of cells. These cells are classified into two groups: a master cell group (master cell group, MCG) and a secondary cell group (secondary cell group, SCG). If the dual connectivity is not performed, a group of cells communicating with the terminal device is the MCG.

A primary cell in the MCG is a primary cell (primary cell, PCell), a primary cell in the SCG is a primary secondary cell (primary secondary cell, PSCell), and other cells in the MCG and the SCG are secondary cells (secondary cells, SCells).

The PCell in the MCG and the SCell in the MCG are combined by using the CA technology. The PSCell in the SCG and the SCell in the SCG are also combined by using the carrier aggregation technology.

When subsequent descriptions of this application are applied to the MCG, a PCell is the PCell in the MCG, and an SCell is the SCell in the MCG; or when subsequent descriptions of this application are applied to the SCG, a PCell is the PSCell in the SCG, and an SCell is the SCell in the SCG.

### (4) Carrier dormancy/non-dormancy indication

A secondary carrier (SCell) dormancy (dormancy) mechanism is introduced to 3GPP Rel-16. Both uplink and downlink transmission on a dormant secondary carrier are stopped, but periodic measurement is still performed on the cell, where measurement information for the cell is reported to a network device through another cell (for example, a physical uplink control channel (physical uplink control channel, PUCCH) cell). Switching between a dormancy behavior and a non-dormancy (non-dormancy) behavior of the SCell is implemented through bandwidth part (bandwidth part, BWP) switching. When a specific SCell is indicated to be in a dormant state, a terminal device switches from a current active downlink BWP to a dormant (dormant) BWP on the SCell. The terminal device does not need to perform physical downlink control channel (physical downlink control channel, PDCCH) monitoring in the dormant BWP. Alternatively, when the SCell is a scheduled carrier in cross-carrier scheduling, the terminal device does not need to detect a PDCCH that is on a corresponding scheduling carrier and that is for scheduling the SCell. An identifier (identifier, ID) of the dormant BWP may be indicated by higher-layer signaling, namely, dormant BWP-Id. That an SCell enters a dormant state means: An active downlink BWP of the SCell is switched from a non-dormant BWP to a dormant BWP.

Switching between dormancy and non-dormancy of an SCell may be indicated by DCI. Details are as follows:

In a discontinuous reception (discontinuous reception, DRX) mode or active time in the DRX mode, there are two indication manners:
Manner 1: A secondary carrier dormancy indication (SCell dormancy indication) field in a DCI format (format) 0_1 or 1_1 indicates whether the SCell is in a dormant or non-dormant state, and the DCI may also be for scheduling data.
Manner 2: A specific field in a DCI format 1_1 indicates whether the SCell is in a dormant state or a non-dormant state, and the DCI cannot be for scheduling data.

In inactive time in the DRX mode, there is the following indication manner:

A secondary carrier dormancy indication field in a DCI format 2_6 indicates whether the SCell is in a dormant or non-dormant state.

### (5) Active/Inactive state of an SCell

A PCell does not support an active/inactive state, and the SCell supports the active/inactive state. When the SCell is in the active state, normal SCell operations are performed, where the operations include transmission of a sounding reference signal (sounding reference signal, SRS) on the SCell, reporting of channel state information (channel state information, CSI) for the SCell, PDCCH monitoring on the SCell, PDCCH monitoring for the SCell, and PUCCH transmission on the SCell (if configured).

When the SCell is in the inactive state, no SRS is sent on the SCell, no CSI for the SCell is reported, no transmission is performed on an uplink shared channel (uplink shared channel, UL-SCH) on the SCell, no transmission is performed on a random access channel (random access channel, RACH) on the SCell, no PDCCH on the SCell is monitored, no PDSCH for the SCell is monitored, and no PUCCH transmission is performed on the SCell.

A configured SCell or configured SCells may be activated and deactivated in the following manners:

An SCell activation/deactivation medium access control control element (medium access control control element, MAC CE) sent by a network device is received.

An sCellDeactivationTimer timer is configured for each configured SCell (except an SCell for which a PUCCH is configured), and the associated SCell is deactivated when the timer expires.

sCellState is configured for each configured SCell. If sCellState is configured, the associated SCell is activated during SCell configuration. If sCellState is not configured, the associated SCell is deactivated.

A terminal device maintains a deactivation timer sCellDeactivationTimer for each SCell. Values of deactivation timers corresponding to all SCells of a specific terminal device are the same. Further, the value may be set to "infinity", to be specific, timer (timer)-based SCell deactivation is disabled. In this case, the terminal device cannot control SCell deactivation.

For an SCell, when the terminal device does not receive data or a PDCCH message in the SCell within time specified by a deactivation timer, the SCell is to be deactivated. This is also a case in which the terminal device may autonomously deactivate a specific SCell.

### (6) Cross-carrier scheduling

A cell for sending a control channel corresponding to a data channel is referred to as a scheduling cell (scheduling cell), and may also be referred to as a scheduling cell. A cell for sending the data channel is referred to as a scheduled cell (scheduled cell).

A downlink carrier of a cell carries a control channel, to perform uplink and downlink data channel scheduling of the cell. The cell is a self-scheduling (self-scheduling) cell. The cell may be a scheduling cell, and may also be a scheduled cell.

A downlink carrier of a cell carries a control channel, to perform uplink and downlink data channel scheduling of another cell. In this case, the cell that carries the control channel is referred to as a scheduling cell, and the cell that carries uplink and downlink data channels is referred to as a scheduled cell. This scheduling mode is referred to as cross-carrier scheduling (cross-carrier scheduling, CCS). One scheduling cell may correspond to a plurality of scheduled cells, to be specific, a control channel may be sent on one scheduling cell to perform data scheduling of a plurality of scheduled cells.

### (7) Downlink control information format

A PDCCH carries DCI, and the DCI has a plurality of DCI formats (DCI formats). Table 1 and Table 2 below enumerate some DCI formats and usages thereof.

**Table 1: DCI format and usage thereof**

| DCI format | Usage |
|---|---|
| 0_0 | Scheduling of a PUSCH on one cell (cell) |
| 0_1 | Scheduling of a PUSCH on one cell |
| 0_2 | Scheduling of a PUSCH on one cell |
| 1_0 | Scheduling of a PDSCH on one cell |
| 1_1 | Scheduling of a PDSCH on one cell |
| 1_2 | Scheduling of a PDSCH on one cell |
| 2_0 | Indicates a slot format for a group of terminal devices |
| 2_1 | Notifies a group of terminal devices that no signal transmission is performed on an indicated physical resource block (physical resource block, PRB) and orthogonal frequency division multiplexing (orthogonal frequency division multiplexing, OFDM) symbol |
| 2_2 | Transmission of power control commands for a PUCCH and a PUSCH |
| 2_3 | Transmission of a group of power control commands for sending an SRS by one or more terminal devices |

As enumerated in Table 1, the DCI format 0_0/0_1/0_2/1_0/1_1/1_2 is a single-cell scheduling DCI format. This may also be understood as: One piece of DCI in the 0_0/0_1/0_2/1_0/1_1/1_2 format may be for scheduling data transmission of one cell.

**Table 2: DCI format and usage thereof**

| DCI format | Usage |
|---|---|
| 0_X | Scheduling of a PUSCH on one or more cells |
| 1_X | Scheduling of a PDSCH on one or more cells |

As enumerated in Table 2, the two DCI formats may represent a multi-cell scheduling DCI format. In the two DCI formats, there may be a first indicator field indicating a cell group currently scheduled by using DCI. For example, the first indicator field may be designed as two bits (bits) to indicate four carrier combinations.

**Table 3: First indicator field and carrier combination thereof**

| First indicator field | CC(s) |
|---|---|
| 0 (00) | 1 |
| 1 (01) | 2, 3 |
| 2 (10) | 0, 2 |
| 3 (11) | 0, 1, 2, 3 |

One piece of DCI in the multi-cell scheduling DCI format may be for scheduling data transmission of a plurality of cells, but not all pieces of DCI in the multi-cell scheduling DCI format are for scheduling data transmission of a plurality of cells. As enumerated in Table 3, when values of the two bits of the first indicator field are 01, the DCI may be for scheduling two cells, namely, the CC 2 and the CC 3. When values of the two bits of the first indicator field are 00, the DCI may be for scheduling one cell, namely, the CC 1.

One scheduled cell group includes all cells that may be scheduled in one multi-cell scheduling DCI format, and a quantity of cells in the scheduled cell group is greater than or equal to 2. For example, a scheduling cell group corresponding to the multi-cell scheduling DCI format in the example enumerated in Table 3 includes the CC 0, the CC 1, the CC 2, and the CC 3.

One scheduled cell group includes a plurality of cells indicated by one value of a first indicator field of one multi-cell scheduling DCI format, a quantity of cells in each of these scheduled cell groups is greater than or equal to 1, and a quantity of cells in at least one scheduled cell group is greater than or equal to 2. For example, for the multi-cell scheduling DCI format in the example enumerated in Table 3, when the first indicator field is 00, an indicated scheduled cell group is the CC 1; when the first indicator field is 01, an indicated scheduled cell group is the CC 2 and the CC 3; when the first indicator field is 10, an indicated scheduled cell group is the CC 0 and the CC 2; and when the first indicator field is 11, an indicated scheduled cell group is the CC 0, the CC 1, the CC 2, and the CC 3.

The first indicator field may alternatively be designed in another manner. For example, the first indicator field indicates both a scheduled cell group and a BWP ID. In this case, the first indicator field may have a plurality of different values corresponding to a same scheduled cell group.

It should be understood that, the technical solutions in embodiments of this application may be applied to various communication systems, for example, a long term evolution (long term evolution, LTE) system, an LTE frequency division duplex (frequency division duplex, FDD) system, and an LTE time division duplex (time division duplex, TDD) system. The technical solutions in embodiments of this application may be further applied to another communication system, for example, a public land mobile network (public land mobile network, PLMN) system, a long term evolution advanced (LTE advanced, LTE-A) system, a 5th generation (5th generation, 5G) mobile communication system, an NR system, a machine to machine (machine to machine, M2M) system, or another future evolved communication system. This is not limited in embodiments of this application. The technical solutions provided in embodiments of this application may be further applied to another communication system, provided that an entity in the communication system may send control information and send (and/or receive) a transport block, and another entity in the communication system may receive the control information and receive (and/or send) the transport block.

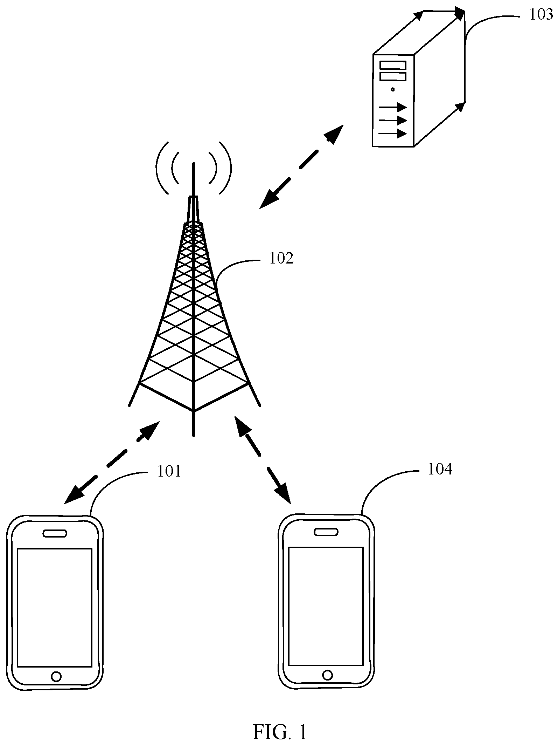

FIG. 1 is a diagram of a network architecture of a mobile communication system according to an embodiment of this application. As shown in FIG. 1, the mobile communication system may include at least one terminal device (for example, a terminal device 101 and a terminal device 104 in FIG. 1), a network device 102, and a core network device 103. The terminal device may be connected to the network device 102 in a wireless manner, and may access the core network device 103 via the network device 102. The network device 102 is connected to the core network device 103 in a wireless or wired manner. The network device 102 and the core network device 103 may be different physical devices independent of each other; functions of the core network device 103 and logical functions of the network device 102 may be integrated into a same physical device; or some functions of the core network device 103 and some functions of the network device 102 may be integrated into one physical device. The terminal device may be in a fixed location, or may be mobile.

The terminal device is a user-side entity configured to receive or transmit a signal. The terminal device may be deployed on land, and includes an indoor device, an outdoor device, a handheld device, or a vehicle-mounted device. The terminal device may alternatively be deployed on water (for example, on a ship), or may be deployed in air (for example, on an airplane, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in telemedicine (telemedicine), a wireless terminal device in a smart grid (smart grid), a wireless terminal in transportation safety (transportation safety), a wireless terminal device in a smart city (smart city), or a wireless terminal in a smart home (smart home), or may be user equipment (user equipment, UE) or the like.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and include devices that are dedicated to only one type of application function and that need to work with other devices such as smartphones, such as various smart bands or smart jewelry for monitoring physical signs.

In addition, in embodiments of this application, the terminal device may alternatively be a terminal device in an Internet of things (Internet of things, IoT) system. An IoT is an important part of future development of information technologies, and a main technical feature of the IoT is to connect things to a network by using a communication technology, to implement an intelligent network for human-machine interconnection or interconnection between things. In embodiments of this application, the IoT technology can implement massive connections, deep coverage, and terminal power saving by using, for example, a narrowband (narrowband, NB) technology.

The network device 102 may be an entity configured to transmit or receive a signal, and may be a device configured to communicate with the terminal device. The network device may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN, or the like. This is not limited in embodiments of this application. The network device may be a device in a wireless network, for example, a radio access network (radio access network, RAN) node that connects the terminal to the wireless network. Currently, some examples of the RAN node are a base station, a next generation NodeB (next generation NodeB, gNB), a transmission reception point (transmission reception point, TRP), an eNB, a home base station, a baseband unit (baseband unit, BBU), or an access point (access point, AP) in a Wi-Fi system. In a network structure, the network device may include a central unit (central unit, CU) node, a distributed unit (distributed unit, DU) node, or a RAN device including a CU node and a DU node.

Embodiments of this application are applicable to downlink signal transmission, are also applicable to uplink signal transmission, and are further applicable to device-to-device (device-to-device, D2D) signal transmission. For the downlink signal transmission, a sending device is a radio access network device, and correspondingly a receiving device is a terminal device. For the uplink signal transmission, a sending device is a terminal device, and correspondingly a receiving device is a radio access network device. For the D2D signal transmission, a sending device is a terminal device, and correspondingly a receiving device is also a terminal device. A signal transmission direction is not limited in embodiments of this application.

Communication between the radio access network device and the terminal device and communication between terminal devices may be performed through a licensed spectrum (licensed spectrum), may be performed through an unlicensed spectrum (unlicensed spectrum), or may be performed through both of a licensed spectrum and an unlicensed spectrum. Communication between the radio access network device and the terminal device and communication between terminal devices may be performed through a spectrum below 6 GHz, may be performed through a spectrum above 6 GHz, or may be performed through both of a spectrum below 6 GHz and a spectrum above 6 GHz. A spectrum resource used between the radio access network device and the terminal device are not limited in embodiments of this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for executing a method provided in embodiments of this application is not particularly limited in embodiments of this application, provided that a program that records code for the method provided in embodiments of this application can be run to perform communication according to the method provided in embodiments of this application. For example, the method provided in embodiments of this application may be performed by the terminal device or the network device, or by a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, contain, and/or carry instructions and/or data.

It should be noted that quantities and types of network devices, terminal devices, and core network devices included in the network architecture shown in FIG. 1 are merely examples. Embodiments of this application are not limited thereto. For example, there may be more or fewer terminal devices that communicate with the network device. For example, there may be more or fewer core network devices that communicate with the network device. For brevity of description, the devices are not described one by one in the accompanying drawings. In addition, in the network architecture shown in FIG. 1, although the network device, the terminal device, and the core network device are shown, the application scenario may include but is not limited to the network device, the terminal device, and the core network device. For example, the application scenario may further include a device configured to bear a virtualized network function, a wireless relay device, and a wireless backhaul device. These devices are clear to persons skilled in the art, and are not described herein one by one.

To facilitate understanding of embodiments of this application, the following first describes a plurality of current technical solutions for implementing a scheduling DCI format. The following provides descriptions by using examples.

A terminal device supports both a multi-cell scheduling DCI format and a single-cell scheduling DCI format. Compared with the single-cell scheduling DCI format, the multi-cell scheduling DCI format includes some fields in scheduling that may be shared by a plurality of cells, to reduce signaling overheads.

However, for the multi-cell scheduling DCI format, if one or more cells in a scheduled cell group of the multi-cell scheduling DCI format are deactivated or set to a dormant state, data scheduling cannot be performed on these cells. If the multi-cell scheduling DCI format is still used, there are problems such as high DCI signaling overheads and low scheduling flexibility. If a scheduling cell of the multi-cell scheduling DCI format is deactivated or set to a dormant state, the scheduling cell can no longer send the multi-cell scheduling DCI format. This causes a scheduling failure. Therefore, how to reduce signaling overheads for a multi-cell scheduling DCI format and how to improve cell scheduling flexibility are problems to be urgently resolved.

In view of the problems of high overheads for the cell scheduling DCI format and low scheduling flexibility, embodiments of this application provide a communication method. A terminal device monitors a first DCI format, and stops, when determining that a first cell enters an inactive state or a dormant state, monitoring the first DCI format, where the first DCI format may be for scheduling data transmission of two or more cells. This can reduce the signaling overheads for the cell scheduling DCI format, and improve the cell scheduling flexibility.

This application provides a communication method, and descriptions are separately provided below by using the following embodiments. It should be understood that these communication methods may be used in combination with each other.

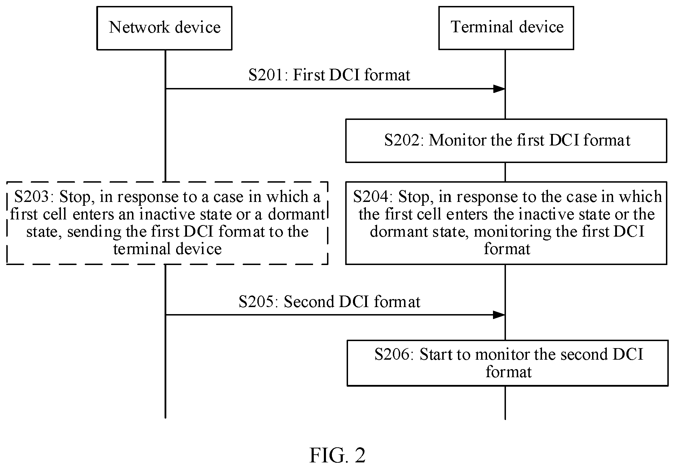

In embodiments (for example, the following embodiments corresponding to FIG. 2 to FIG. 8) of this application, an example in which a terminal device and a network device perform interaction is used to illustrate the method, but entities for performing the interaction are not limited in this application. For example, the terminal device may alternatively be a chip, a chip system, or a processor that supports the terminal device to implement the method, or may be a logical module or software that can implement a part or all of functions of the terminal device; and the network device may alternatively be a chip, a chip system, or a processor that supports the network device to implement the method, or may be a logical module or software that can implement a part or all of functions of the network device. In embodiments of this application, unified descriptions are provided herein, and details are not described below again.

With reference to the foregoing network architecture, the following describes the communication method provided in embodiments of this application. FIG. 2 is a diagram of interaction in a communication method according to an embodiment of this application. As shown in FIG. 2, the communication method may include the following steps.

S201: A network device sends a first DCI format to a terminal device. Correspondingly, the terminal device receives the first DCI format from the network device.

The first DCI format may be replaced with first DCI, and a format of the first DCI is the first DCI format. The first DCI format is usable for scheduling data transmission of two or more cells. For example, the first DCI format may also be referred to as a multi-cell scheduling DCI format. It may be understood that the first DCI format is usable for scheduling uplink data transmission and/or downlink data transmission of the two or more cells. For example, the first DCI format is usable for scheduling downlink data channels of the two or more cells, in other words, one piece of DCI in the first DCI format is for scheduling at least one downlink data channel on each of the two or more cells. For example, the first DCI format is usable for scheduling uplink data channels of the two or more cells, in other words, one piece of DCI in the first DCI format is for scheduling at least one uplink data channel on each of the two or more cells. For example, the first DCI format is usable for scheduling uplink data channels and/or downlink data channels of the two or more cells, in other words, one piece of DCI in the first DCI format is for scheduling at least one data channel on each of the two or more cells, where the data channel may be an uplink data channel or a downlink data channel. The downlink data channel may be a physical downlink shared channel (physical downlink shared channel, PDSCH), and the uplink data channel may be a physical uplink shared channel (physical uplink shared channel, PUSCH).

One scheduled cell group includes all cells that may be scheduled in one multi-cell scheduling DCI format, and a quantity of cells in the scheduled cell group is greater than or equal to 2. For example, a scheduling cell group corresponding to the multi-cell scheduling DCI format in the example enumerated in Table 3 includes the CC 0, the CC 1, the CC 2, and the CC 3.

The first DCI format may include a first indicator field. It may be understood that different values of the first indicator field may indicate different scheduled cell groups. The scheduled cell group may include only one cell. However, at least one scheduled cell group includes two or more cells. In this case, the DCI format is usable for scheduling uplink data transmission and/or downlink data transmission of the two or more scheduled cell groups. One scheduled cell group includes a plurality of cells indicated by one value of a first indicator field of one multi-cell scheduling DCI format, a quantity of cells in each of these scheduled cell groups is greater than or equal to 1, and a quantity of cells in at least one scheduled cell group is greater than or equal to 2. For example, for the multi-cell scheduling DCI format in the example enumerated in Table 3, when the first indicator field is 00, an indicated scheduled cell group is the CC 1; when the first indicator field is 01, an indicated scheduled cell group is the CC 2 and the CC 3; when the first indicator field is 10, an indicated scheduled cell group is the CC 0 and the CC 2; and when the first indicator field is 11, an indicated scheduled cell group is the CC 0, the CC 1, the CC 2, and the CC 3.

For example, the first indicator field has M values. A first scheduled cell group is a set of all cells that can be indicated by the first indicator field, in other words, the first scheduled cell group includes all scheduled cells that can be scheduled by using all the values of the first indicator field. It may be understood that a cell in the first scheduled cell group may be scheduled, but is not definitely scheduled, in other words, the first scheduled cell group is a set of cells that can be scheduled by using DCI in the first DCI format. There is only one first scheduled cell group of a 1st DCI format. Each value in the M values indicates one second scheduled cell group, and each second scheduled cell group includes one or more scheduled cells. A specific second scheduled cell group is a second scheduled cell group with a largest quantity of scheduled cells in M second scheduled cell groups, where M is a positive integer greater than or equal to 1. It may be understood that the first indicator field may alternatively be designed in another manner. For example, the first indicator field indicates both a scheduled cell group and a BWP ID. In this case, the first indicator field may have a plurality of different values corresponding to a same scheduled cell group. It may be understood that, at a specific moment, a cell in the first scheduled cell group may be in an inactive state, an active and non-dormant state, or an active and dormant state. When a specific cell in the first scheduled cell group is in an active and dormant state or an inactive state, the cell cannot be scheduled for data transmission. When the cell is in an active and non-dormant state, the cell can be scheduled in the first DCI format for data transmission.

For example, the first indicator field of the first DCI format has two bits and four values, namely, 00, 01, 10, and 11, where 00 indicates scheduling of a first cell (a 1^{st} second scheduled cell group), 01 indicates scheduling of a third cell and a fourth cell (a 2^{nd} second scheduled cell group), 10 indicates scheduling of the first cell, a second cell, and the third cell (a 3^{rd} second scheduled cell group), and 11 indicates scheduling of the second cell, the third cell, and the fourth cell (a 4^{th} second scheduled cell group). Herein, the first scheduled cell group includes the first cell, the second cell, the third cell, and the fourth cell, and there are four second scheduled cell groups corresponding to the first DCI format that are respectively indicated by 00/01/10/11. Specific second scheduled cell groups are the two second scheduled cell groups indicated by 10 and 11. This is because the two second cell groups include a largest quantity of cells, namely, three cells.

In an embodiment, as enumerated in Table 3 above, the first indicator field has four values: 00, 01, 10, and 11. 00 indicates scheduling of the CC 1, 01 indicates scheduling of the CC 2 and the CC 3, 10 indicates scheduling of the CC 0 and the CC 2, and 11 indicates scheduling of the CC 0, the CC 1, the CC 2, and the CC 3. The first scheduled cell group includes the CC 0, the CC 1, the CC 2, and the CC 3. There are four second scheduled cell groups corresponding to the first DCI format that are respectively indicated by 00/01/10/11, to be specific, a 1^{st} second scheduled cell group includes the CC 1, a 2^{nd} second scheduled cell group includes the CC 2 and the CC 3, a 3^{rd} second scheduled cell group includes the CC 0 and the CC 2, and a 4^{th} second scheduled cell group includes the CC 0, the CC 1, the CC 2, and the CC 3. The 4^{th} second scheduled cell group indicated by 11 includes four cells. Therefore, the 4^{th} second scheduled cell group is the specific second scheduled cell group.

Before sending the first DCI format to the terminal device, the network device may send related configuration information of the first DCI format, for example, a PDCCH candidate that can carry the first DCI format, to the terminal device. After sending the related configuration information of the first DCI format to the terminal device, the network device may send, when scheduling needs to be performed, the first DCI format to the terminal device on the PDCCH candidate that can carry the first DCI format.

S202: The terminal device monitors the first DCI format.

That the terminal device monitors the first DCI format may be understood as: The terminal device receives the PDCCH candidate, and performs decoding based on the first DCI format.

After receiving the related configuration information of the first DCI format from the network device, the terminal device may monitor the first DCI format, for example, monitor, on the PDCCH candidate that can carry the first DCI format, whether the network device delivers the first DCI format.

S203: The network device stops, in response to a case in which a first cell enters an inactive state or a dormant state, sending the first DCI format to the terminal device.

The first cell may be a cell that carries the first DCI format, or the first cell belongs to the first scheduled cell group. This may be understood as: The first cell may be a scheduling cell corresponding to the first DCI format, or may be a scheduled cell in the first scheduled cell group.

That the network device stops, in response to a case in which a first cell enters an inactive state or a dormant state, sending the first DCI format to the terminal device may be understood as: When determining that the first cell enters the inactive state or the dormant state, the network device stops sending the first DCI format to the terminal device; the network device keeps monitoring a status of the first cell, and does not stop sending the first DCI format to the terminal device until the first cell enters the inactive state or the dormant state; or if the first cell enters the inactive state or the dormant state, the network device may stop sending the first DCI format to the terminal device. It may be understood that "in response to" may be replaced with "according to", "based on", "when", "if", or the like, provided that the event-level condition that the first cell enters the inactive state or the dormant state may be indicated.

That the first cell enters an inactive state or a dormant state may be replaced with: The first cell is in an inactive state or a dormant state, or the first cell is a cell in an inactive state or a dormant state. That the first cell enters an inactive state may be understood as: The first cell is deactivated. It may be understood that, before the first cell enters the inactive state, the first cell is in an active state, or is in an active and non-dormant state. It may be understood that, before the first cell enters a dormant state, the first cell is in an active and non-dormant state, or is in a non-dormant state. That the first cell enters an inactive state or a dormant state may be replaced with: The first cell enters an inactive state, or the first cell enters a dormant state. That the first cell enters an inactive state may be replaced with: The first cell enters an inactive state from an active state, or the first cell enters an inactive state from an active and non-dormant state. That the first cell enters a dormant state may be replaced with: The first cell enters a dormant state from an active and non-dormant state, the first cell enters a dormant state from a non-dormant state, or an active downlink BWP of the first cell is switched from a non-dormant BWP to a dormant BWP. For a manner in which the first cell enters the inactive state or the dormant state, refer to the foregoing related content.

Optionally, an implementation of a trigger condition for stopping, by the network device, sending the first DCI format to the terminal device may be any one of the following. FIG. 2 is a flowchart merely using a manner 1 as an example for description.

Manner 1: The network device stops, in response to the case in which the first cell enters the inactive state or the dormant state, sending the first DCI format to the terminal device.

Manner 2: The network device stops, in response to determining that a first condition is met, sending the first DCI format to the terminal device. The first condition includes either or both of the following: There are N or more cells in an inactive state or a dormant state in the first scheduled cell group, where N is a positive integer greater than or equal to 2; or there are K or fewer cells in an active state or a non-dormant state in the first scheduled cell group, where K is a positive integer greater than or equal to 1. It may be understood that N and K may be configured by RRC or predefined. A cell in an inactive state or a dormant state may be understood as a cell that is entering or has entered an inactive state or a dormant state or a cell that is in an inactive state or a dormant state.

That there are N or more cells in an inactive state or a dormant state in the first scheduled cell group may be understood as: There are N or more cells in an inactive state in the first scheduled cell group, there are N or more cells in a dormant state in the first scheduled cell group, or there are N or more cells in an inactive state or a dormant state in the first scheduled cell group. For example, the first scheduled cell group includes A cells in an inactive state and B cells in a dormant state, where A+B≥N, A and B are both integers greater than or equal to 0, and N may be configured by RRC or predefined.

That there are K or fewer cells in an active state or a non-dormant state in the first scheduled cell group may be understood as: There are K or fewer cells in an active state in the first scheduled cell group, there are K or fewer cells in a non-dormant state in the first scheduled cell group, there are K or fewer cells in an active and non-dormant state in the first scheduled cell group, or there are K or fewer cells in an active state or a non-dormant state in the first scheduled cell group. For example, the first scheduled cell group includes C cells in an active state and D cells in a non-dormant state, where C+D≤K, C and D are both integers greater than or equal to 0, and K may be configured by RRC or predefined. A cell in a non-dormant state is a cell in an active and non-dormant state.

Manner 3: The network device stops, in response to determining that a second condition is met, sending the first DCI format to the terminal device. The second condition includes any one or more of the following: There is at least one cell in an inactive state or a dormant state in any specific second scheduled cell group; there are N or more cells in an inactive state or a dormant state in any specific second scheduled cell group; or there are K or fewer cells in an active state or a non-dormant state in any second scheduled cell group.

That there are N or more cells in an inactive state or a dormant state in any specific second scheduled cell group may be understood as: There are N or more cells in an inactive state in any specific second scheduled cell group, there are N or more cells in a dormant state in any specific second scheduled cell group, or there are N or more cells in an inactive state or a dormant state in any specific second scheduled cell group. For example, the any specific second scheduled cell group includes A cells in an inactive state and B cells in a dormant state, where A+B≥N, A and B are both integers greater than or equal to 0, and N may be configured by RRC or predefined.

That there are K or fewer cells in an active state or a non-dormant state in any second scheduled cell group may be understood as: There are K or fewer cells in an active state in any specific second scheduled cell group, there are K or fewer cells in a non-dormant state in any specific second scheduled cell group, there are K or fewer cells in an active and non-dormant state in any specific second scheduled cell group, or there are K or fewer cells in an active state or a non-dormant state in any specific second scheduled cell group. For example, the first scheduled cell group includes C cells in an active state and D cells in a non-dormant state, where C+D≤K, C and D are both integers greater than or equal to 0, and K may be configured by RRC or predefined. A cell in a non-dormant state is a cell in an active and non-dormant state.

Manner 4: The network device determines that the first cell enters the inactive state or the dormant state, then determines whether a first condition is met, and stops, when the first condition is met, sending the first DCI format to the terminal device.

Manner 5: The network device determines that the first cell enters the inactive state or the dormant state, then determines whether a second condition is met, and stops, when the second condition is met, sending the first DCI format to the terminal device.

Manner 6: The network device stops, in response to a case in which the first cell enters the inactive state or the dormant state and a first condition is met, sending the first DCI format to the terminal device.

Manner 7: The network device stops, in response to a case in which the first cell enters the inactive state or the dormant state and a second condition is met, sending the first DCI format to the terminal device.

Manner 8: When determining that a first condition is always met, the network device stops, in response to the case in which the first cell enters the inactive state or the dormant state, sending the first DCI format to the terminal device.

Manner 9: When determining that a second condition is always met, the network device stops, in response to the case in which the first cell enters the inactive state or the dormant state, sending the first DCI format to the terminal device.

S204: The terminal device stops, in response to the case in which the first cell enters the inactive state or the dormant state, monitoring the first DCI format.

That the terminal device stops, in response to the case in which the first cell enters the inactive state or the dormant state, monitoring the first DCI format may be understood as: When determining that the first cell enters the inactive state or the dormant state, the terminal device stops monitoring the first DCI format; the terminal device keeps monitoring the status of the first cell, and does not stop monitoring the first DCI format until the first cell enters the inactive state or the dormant state; or if the first cell enters the inactive state or the dormant state, the terminal device may stop monitoring the first DCI format.

Optionally, an implementation of a trigger condition for stopping, by the terminal device, monitoring the first DCI format may be any one of the following. FIG. 2 is a flowchart merely using a manner 1 as an example for description.

Manner 1: The terminal device stops, in response to the case in which the first cell enters the inactive state or the dormant state, monitoring the first DCI format.

Manner 2: The terminal device stops, in response to determining that the first condition is met, monitoring the first DCI format.

Manner 3: The terminal device stops, in response to determining that the second condition is met, monitoring the first DCI format.

Manner 4: The terminal device determines that the first cell enters the inactive state or the dormant state, then determines whether the first condition is met, and stops, when the first condition is met, monitoring the first DCI format.

Manner 5: The terminal device determines that the first cell enters the inactive state or the dormant state, then determines whether the second condition is met, and stops, when the second condition is met, monitoring the first DCI format.

Manner 6: The terminal device stops, in response to the case in which the first cell enters the inactive state or the dormant state and the first condition is met, monitoring the first DCI format.

Manner 7: The terminal device stops, in response to the case in which the first cell enters the inactive state or the dormant state and the second condition is met, monitoring the first DCI format.

Manner 8: When determining that the first condition is always met, the terminal device stops, in response to the case in which the first cell enters the inactive state or the dormant state, monitoring the first DCI format.

Manner 9: When determining that the second condition is always met, the terminal device stops, in response to the case in which the first cell enters the inactive state or the dormant state, monitoring the first DCI format.

For a specific implementation, refer to the implementation of the condition for stopping, by the network device, sending the first DCI format to the terminal device in step S203. Details are not described again.

S205: The network device sends a second DCI format to the terminal device. Correspondingly, the terminal device receives the second DCI format from the terminal device.

The second DCI format may be replaced with second DCI, and a format of the second DCI is the second DCI format. One piece of DCI in the second DCI format is for scheduling data transmission of only one cell. For example, the second DCI format may also be referred to as a single-cell scheduling DCI format. The second DCI format may include a second indicator field, and different values of the second indicator field may indicate different scheduled cells, but cannot indicate a scheduled cell group. To be specific, any value of the second indicator field can indicate only one scheduled cell, and cannot indicate two or more scheduled cells.

For example, the second indicator field of the second DCI format has two bits and four values: 00, 01, 10, and 11. 00 indicates scheduling of the first cell, 01 indicates scheduling of the second cell, 10 indicates scheduling of the third cell, and 11 indicates scheduling of the fourth cell.

It may be understood that the network device may determine, based on the status of the first cell, to switch a DCI format sent to the terminal device. For example, the network device may stop, in response to the case in which the first cell enters the inactive state or the dormant state, sending the first DCI format to the terminal device, and switch to starting to send the second DCI format to the terminal device. Alternatively, this may be understood as: The first cell enters the inactive state or the dormant state, and the network device switches from sending the multi-cell scheduling DCI format to sending the single-cell scheduling DCI format.

The network device sends the related configuration information of the first DCI format to the terminal device. Further, optionally, the network device may send related configuration information of the second DCI format, for example, including a PDCCH candidate that can carry the second DCI format, to the terminal device. After sending the related configuration information of the second DCI format to the terminal device, the network device may send, when scheduling needs to be performed, the second DCI format to the terminal device on the PDCCH candidate that can carry the second DCI format.

S206: The terminal device starts to monitor the second DCI format.

That the terminal device monitors the second DCI format may be understood as: The terminal device receives the PDCCH candidate, and performs decoding based on the second DCI format.

After receiving the related configuration information of the second DCI format from the network device, the terminal device may monitor the second DCI format, for example, monitor, on the PDCCH candidate that can carry the second DCI format, whether the network device delivers the second DCI format.

The second DCI format can be for scheduling a second cell, and the second cell belongs to the first scheduled cell group. The second cell is in an active and non-dormant state. It may be understood that the terminal device may determine, based on the status of the first cell, to switch a monitored DCI format. For example, the terminal device may stop, in response to the case in which the first cell enters the inactive state or the dormant state, monitoring the first DCI format, and switch to starting to monitor the second DCI format. Alternatively, this may be understood as: The first cell enters the inactive state or the dormant state, and the terminal device switches from monitoring the multi-cell scheduling DCI format to monitoring the single-cell scheduling DCI format.

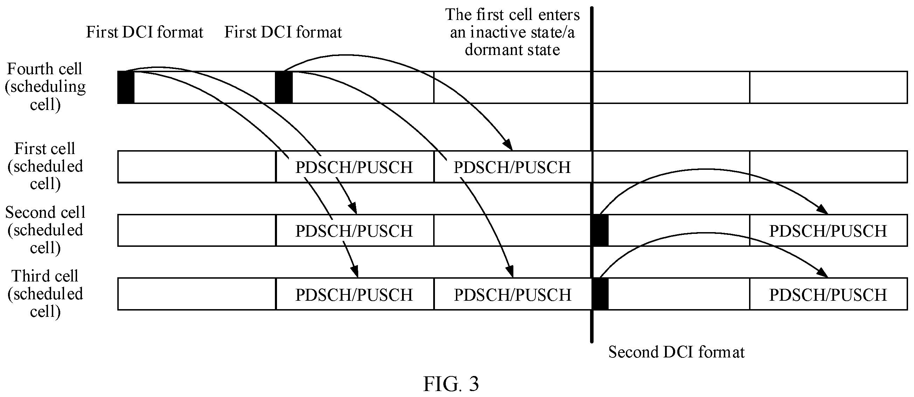

In a possible implementation, both the first cell and the second cell belong to the first scheduled cell group, and the cell that carries the first DCI format is different from a cell that carries the second DCI format. For example, FIG. 3 is a diagram of a DCI format switching scenario according to an embodiment of this application. As shown in FIG. 3, a first scheduled cell group includes a first cell, a second cell, and a third cell, the first cell, the second cell, and the third cell belong to one second scheduled cell group, the first cell and the third cell belong to another second scheduled cell group, and a fourth cell is a cell that carries a first DCI format, namely, a scheduling cell. One piece of DCI in the first DCI format is sent on the fourth cell to schedule data transmission of the first cell, the second cell, and the third cell. One piece of DCI in the first DCI format is sent on the fourth cell to schedule data transmission of the first cell and the third cell. When the first cell enters an inactive state or a dormant state, a format of DCI for scheduling the second cell and the third cell is switched from the first DCI format to a second DCI format, and the scheduling cell for the second cell and the third cell may be switched from the fourth cell to the second cell and the third cell respectively, in other words, self-scheduling is performed. Therefore, the cell that carries the first DCI format is different from a cell that carries the second DCI format.

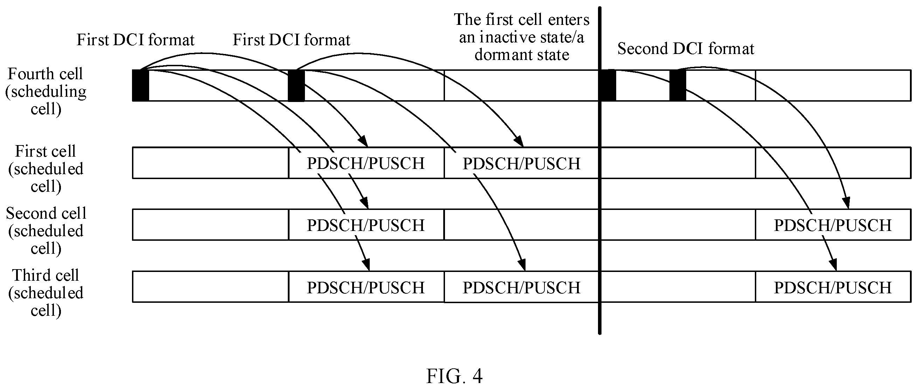

In a possible implementation, both the first cell and the second cell belong to the first scheduled cell group, and the cell that carries the first DCI format is the same as a cell that carries the second DCI format. For example, FIG. 4 is a diagram of another DCI format switching scenario according to an embodiment of this application. As shown in FIG. 4, a first scheduled cell group includes a first cell, a second cell, and a third cell, the first cell, the second cell, and the third cell belong to one second scheduled cell, the first cell and the third cell belong to another second scheduled cell group, and a fourth cell is a cell that carries a first DCI format, namely, a scheduling cell. One piece of DCI in the first DCI format is sent on the fourth cell to schedule data transmission of the first cell, the second cell, and the third cell. One piece of DCI in the first DCI format is sent on the fourth cell to schedule data transmission of the first cell and the third cell. When the first cell enters an inactive state or a dormant state, a format of DCI for scheduling the second cell and the third cell is switched from the first DCI format to a second DCI format, and the scheduling cell for the second cell and the third cell is still the fourth cell, in other words, cross-carrier scheduling is performed. Therefore, the cell that carries the first DCI format is the same as a cell that carries the second DCI format.

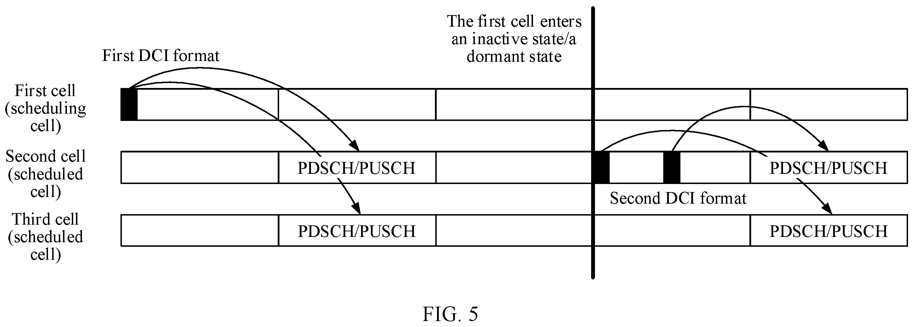

In a possible implementation, the first cell is the cell that carries the first DCI format, the second cell belongs to the first scheduled cell group, and the cell that carries the first DCI format is different from a cell that carries the second DCI format. For example, FIG. 5 is a diagram of still another DCI format switching scenario according to an embodiment of this application. As shown in FIG. 5, a first scheduled cell group includes a second cell and a third cell, and the second cell and the third cell belong to one second scheduled cell group. A first cell is a cell that carries a first DCI format, namely, a scheduling cell. One piece of DCI in the first DCI format is sent on the first cell to schedule data transmission of the second cell and the third cell. When the first cell enters an inactive state or a dormant state, a format of DCI for scheduling the second cell and the third cell is switched from the first DCI format to a second DCI format, and a scheduling cell for the second cell and the third cell changes, and may be any cell other than the first cell in the first scheduled cell group. For example, the scheduling cell shown in FIG. 5 is switched from the first cell to the second cell. Therefore, the cell that carries the first DCI format is different from a cell that carries the second DCI format.

It should be understood that the sequence numbers of the foregoing processes do not mean an execution sequence in this embodiment. The execution sequence of the processes should be determined according to functions and internal logic of the processes, and should not be construed as any limitation on the implementation processes of this embodiment. For example, there may be no execution sequence between steps S201 and S205.

In this embodiment, for the first DCI format, when a cell in the scheduled cell group of the first DCI format is deactivated or set to a dormant state, data scheduling cannot be performed on the cell. The terminal device and the network device may switch the DCI format based on the status of the first cell. For example, the terminal device may monitor the first DCI format, and stop, in response to the case in which the first cell enters the inactive state or the dormant state, monitoring the first DCI format; and the network device may stop, in response to the case in which the first cell enters the inactive state or the dormant state, sending the first DCI format to the terminal device. This can reduce signaling overheads for the cell scheduling DCI format and improve cell scheduling flexibility, and is different from a solution in which the first DCI format is still used and consequently there are problems such as high DCI signaling overheads and low scheduling flexibility.

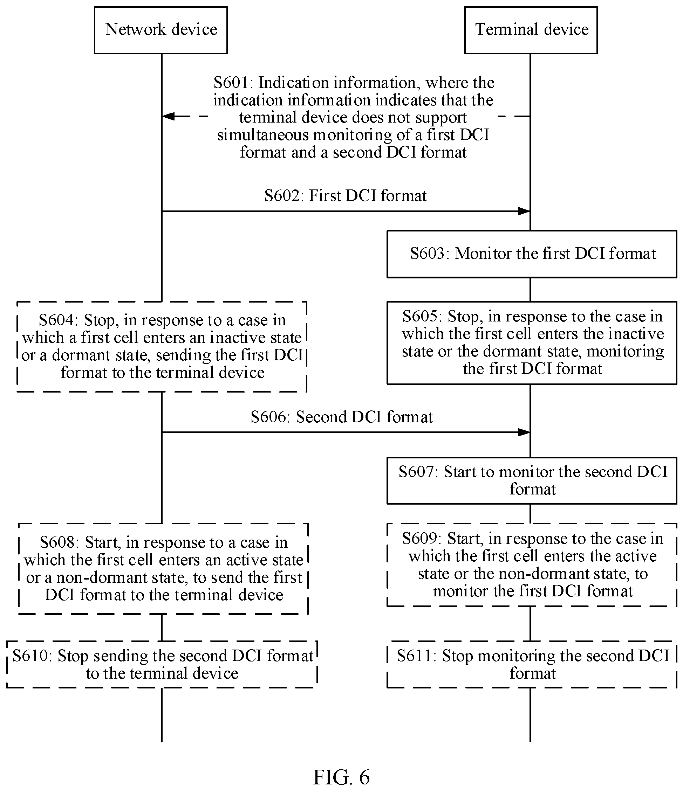

Based on FIG. 2, the following describes another communication method provided in embodiments of this application. It should be understood that, for explanations of terms in different embodiments of this application, reference may be made to each other. To avoid redundant descriptions, a same term may not be repeated in different embodiments. FIG. 6 is a diagram of interaction in another communication method according to an embodiment of this application. As shown in FIG. 6, S601, S604, and S608 to S611 are optional steps. The communication method may include the following steps.

S601: The terminal device sends indication information to the network device, where the indication information indicates that the terminal device does not support simultaneous monitoring of the first DCI format and the second DCI format. Correspondingly, the network device receives the indication information from the terminal device.

S602: The network device sends the first DCI format to the terminal device. Correspondingly, the terminal device receives the first DCI format from the network device.

S603: The terminal device monitors the first DCI format.

S604: The network device stops, in response to the case in which the first cell enters the inactive state or the dormant state, sending the first DCI format to the terminal device.

S605: The terminal device stops, in response to the case in which the first cell enters the inactive state or the dormant state, monitoring the first DCI format.

S606: The network device sends the second DCI format to the terminal device. Correspondingly, the terminal device receives the second DCI format from the terminal device.

S607: The terminal device starts to monitor the second DCI format.

It may be understood that, for specific descriptions of steps S602 to S607, refer to steps S201 to S206 above. Details are not described again.

S608: The network device starts, in response to a case in which the first cell enters an active state or a non-dormant state, to send the first DCI format to the terminal device.

That the network device starts, in response to a case in which the first cell enters an active state or a non-dormant state, to send the first DCI format to the terminal device may be understood as: When determining that the first cell enters the active state or the non-dormant state, the network device starts to send the first DCI format to the terminal device; the network device keeps monitoring a status of the first cell, and does not start to send the first DCI format to the terminal device until the first cell enters the active state or the non-dormant state; or if the first cell enters the active state or the non-dormant state, the network device may start to send the first DCI format to the terminal device. It may be understood that "in response to" may be replaced with "according to", "based on", "when", "if", or the like, provided that the event-level condition that the first cell enters the active state or the non-dormant state may be indicated.

That the first cell enters an active state or a non-dormant state may be replaced with: The first cell is in an active state or a non-dormant state, or the first cell is a cell in an active state or a non-dormant state. It may be understood that before the first cell enters the active state, the first cell is in an inactive state. It may be understood that before the first cell enters the non-dormant state, the first cell is in an inactive state, an active and dormant state, or a dormant state. That the first cell enters an active state or a non-dormant state may be replaced with: The first cell enters an active state, or the first cell enters a non-dormant state. That the first cell enters an active state may be replaced with: The first cell enters an active state from an inactive state. That the first cell enters a non-dormant state may be replaced with: The first cell enters a non-dormant state from an inactive state, the first cell enters a non-dormant state from a dormant state, the first cell enters a non-dormant state from an active and dormant state, or an active downlink BWP of the first cell is switched from a dormant BWP to a non-dormant BWP. That the first cell enters an active state may be understood as: The first cell is activated. For a manner in which the first cell enters the active state or the non-dormant state, refer to the foregoing related content.

Optionally, an implementation of a condition for starting, by the network device, to send the first DCI format to the terminal device may be any one of the following. FIG. 6 is a flowchart merely using a manner 1 as an example for description.

Manner 1: The network device starts, in response to the case in which the first cell enters the active state or the non-dormant state, to send the first DCI format to the terminal device

Manner 2: The network device starts, in response to a case in which a third cell enters an active state or a non-dormant state and when determining that the first condition is not met, to send the first DCI format to the terminal device. The third cell is a cell in an inactive state or a dormant state in the first scheduled cell group. Optionally, the third cell is the first cell.

Manner 3: The network device starts, in response to a case in which a fourth cell enters an active state or a non-dormant state and when determining that the second condition is not met, to send the first DCI format to the terminal device. The fourth cell may be a cell in an inactive state or a dormant state in the first scheduled cell group, the fourth cell may be a cell in an inactive state or a dormant state in the second scheduled cell group, or the fourth cell may be a cell in an inactive state or a dormant state in the specific second scheduled cell group. Optionally, the fourth cell is the first cell.

S609: The terminal device starts, in response to the case in which the first cell enters the active state or the non-dormant state, to monitor the first DCI format.

That the terminal device starts, in response to the case in which the first cell enters the active state or the non-dormant state, to monitor the first DCI format may be understood as: When determining that the first cell enters the active state or the non-dormant state, the terminal device starts to monitor the first DCI format; the terminal device keeps monitoring the status of the first cell, and does not start to monitor the first DCI format until the first cell enters the active state or the non-dormant state; or if the first cell enters the active state or the non-dormant state, the terminal device may start to monitor the first DCI format.

Optionally, an implementation of a condition for starting, by the terminal device, to monitor the first DCI format may be any one of the following. FIG. 6 is a flowchart merely using a manner 1 as an example for description.

Manner 1: The terminal device starts, in response to the case in which the first cell enters the active state or the non-dormant state, to monitor the first DCI format.

Manner 2: The network device starts, in response to the case in which the third cell enters the active state or the non-dormant state and when determining that the first condition is not met, to monitor the first DCI format.

Manner 3: The network device starts, in response to the case in which the fourth cell enters the active state or the non-dormant state and when determining that the second condition is not met, to monitor the first DCI format.

For a specific implementation, refer to the implementation of the trigger condition for starting, by the network device, to send the first DCI format to the terminal device in step S608. Details are not described again.

S610: The network device stops sending the second DCI format to the terminal device.

S611: The terminal device stops monitoring the second DCI format.

It should be understood that the sequence numbers of the foregoing processes do not mean an execution sequence in this embodiment. The execution sequence of the processes should be determined according to functions and internal logic of the processes, and should not be construed as any limitation on the implementation processes of this embodiment. For example, there may be no execution sequence between steps S602 and S606. For another example, step S608 and step S610 may alternatively be: In response to a case in which the first cell enters an active state or a non-dormant state, the network device stops sending the second DCI format to the terminal device, and starts to send the first DCI format to the terminal device. For another example, step S609 and step S611 may alternatively be: In response to the case in which the first cell enters the active state or the non-dormant state, the terminal device stops monitoring the second DCI format, and starts to monitor the first DCI format.

In this embodiment, for the first DCI format, when a cell in the scheduled cell group of the first DCI format is deactivated or set to a dormant state, data scheduling cannot be performed on the cell. The terminal device and the network device may switch a DCI format based on the status of the first cell. For example, the terminal device may monitor the first DCI format, and stop, in response to the case in which the first cell enters the inactive state or the dormant state, monitoring the first DCI format; and the network device may stop, in response to the case in which the first cell enters the inactive state or the dormant state, sending the first DCI format to the terminal device. On this basis, the terminal device may further start, in response to the case in which the first cell enters the active state or the non-dormant state, to monitor the first DCI format; and the network device may start, in response to the case in which the first cell enters the active state or the non-dormant state, to send the first DCI format to the terminal device, so that some fields in scheduling may be shared by a plurality of cells. This can reduce signaling overheads for a cell scheduling DCI format and improve cell scheduling flexibility, and is different from a solution in which the first DCI format is still used and consequently there are problems such as high DCI signaling overheads and low scheduling flexibility.

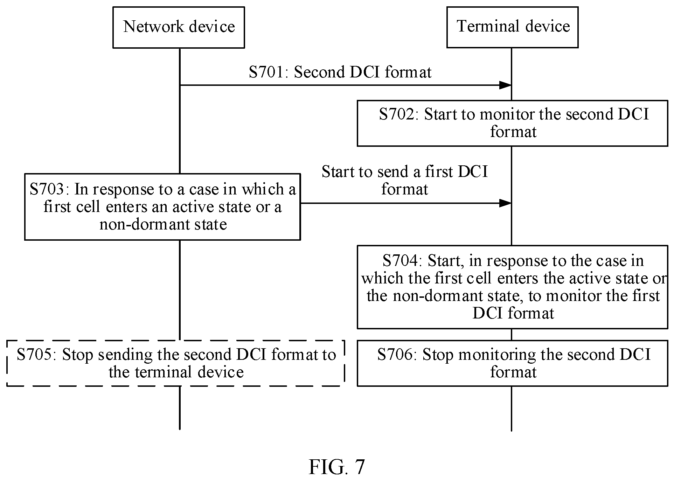

With reference to the foregoing network architecture, the following describes still another communication method provided in embodiments of this application. It should be understood that, for explanations of terms in different embodiments of this application, reference may be made to each other. To avoid redundant descriptions, a same term may not be repeated in different embodiments. FIG. 7 is a diagram of interaction in still another communication method according to an embodiment of this application. As shown in FIG. 7, S705 is an optional step. The communication method may include the following steps.

S701: A network device sends a second DCI format to a terminal device. Correspondingly, the terminal device receives the second DCI format from the network device.

S702: The terminal device starts to monitor the second DCI format.

S703: The network device starts, in response to a case in which a first cell enters an active state or a non-dormant state, to send a first DCI format to the terminal device.

S704: The terminal device starts, in response to the case in which the first cell enters the active state or the non-dormant state, to monitor the first DCI format.

S705: The network device stops sending the second DCI format to the terminal device.

S706: The terminal device stops monitoring the second DCI format.

It should be understood that the sequence numbers of the foregoing processes do not mean an execution sequence in this embodiment. The execution sequence of the processes should be determined according to functions and internal logic of the processes, and should not be construed as any limitation on the implementation processes of this embodiment. For example, step S703 and step S705 may alternatively be: In response to a case in which a first cell enters an active state or a non-dormant state, the network device stops sending the second DCI format to the terminal device, and starts to send a first DCI format to the terminal device. For another example, step S704 and step S706 may alternatively be: In response to the case in which the first cell enters the active state or the non-dormant state, the terminal device stops monitoring the second DCI format, and starts to monitor the first DCI format.

In this embodiment, when a cell in an active state or a non-dormant state in a scheduled cell group is scheduled by using the second DCI format, and when a cell in an inactive state or a dormant state in the scheduled cell group is activated or set to a non-dormant state, data scheduling is performed on the cell. In this case, the first DCI format is used through switching, so that some fields in scheduling may be shared by a plurality of cells. This can reduce signaling overheads. The terminal device and the network device may switch a DCI format based on a status of the first cell. For example, the terminal device may monitor the second DCI format, and stop, in response to the case in which the first cell enters the active state or the non-dormant state, monitoring the second DCI format; and the network device may stop, in response to the case in which the first cell enters the active state or the non-dormant state, sending the second DCI format to the terminal device. This can reduce signaling overheads for a cell scheduling DCI format and improve cell scheduling flexibility.

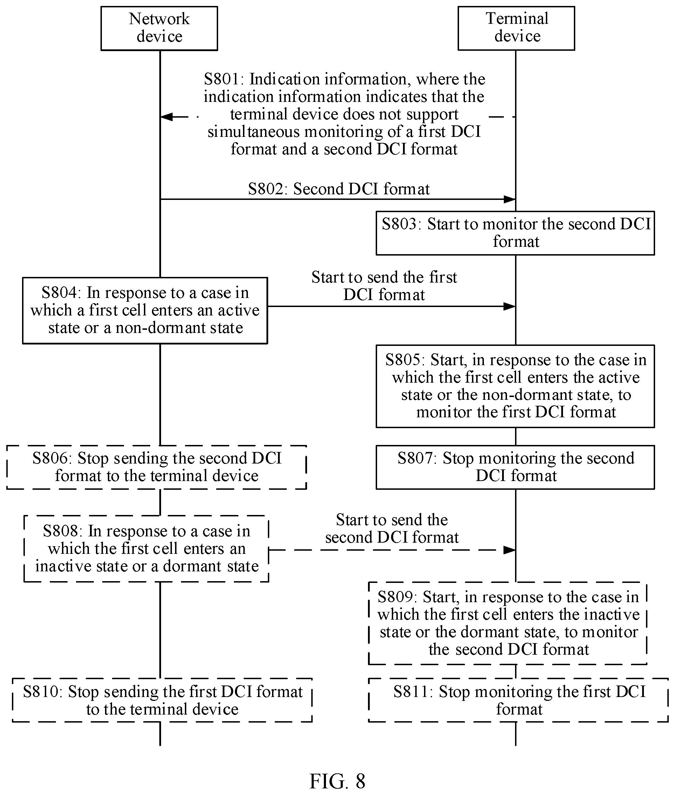

Based on FIG. 7, the following describes still another communication method provided in embodiments of this application. It should be understood that, for explanations of terms in different embodiments of this application, reference may be made to each other. To avoid redundant descriptions, a same term may not be repeated in different embodiments. FIG. 8 is a diagram of interaction in still another communication method according to an embodiment of this application. As shown in FIG. 8, S801, S806, and S808 to S811 are optional steps, and the communication method may include the following steps.

S801: The terminal device sends indication information to the network device, where the indication information indicates that the terminal device does not support simultaneous monitoring of the first DCI format and the second DCI format. Correspondingly, the network device receives the indication information from the terminal device.

S802: The network device sends the second DCI format to the terminal device. Correspondingly, the terminal device receives the second DCI format from the network device.

S803: The terminal device starts to monitor the second DCI format.

S804: The network device starts, in response to the case in which the first cell enters the active state or the non-dormant state, to send the first DCI format to the terminal device.

S805: The terminal device starts, in response to the case in which the first cell enters the active state or the non-dormant state, to monitor the first DCI format.

S806: The network device stops sending the second DCI format to the terminal device.

S807: The terminal device stops monitoring the second DCI format.

S808: The network device starts, in response to a case in which the first cell enters an inactive state or a dormant state, to send the second DCI format to the terminal device.

S809: The terminal device starts, in response to the case in which the first cell enters the inactive state or the dormant state, to monitor the second DCI format.

S810: The network device stops sending the first DCI format to the terminal device.

S811: The terminal device stops monitoring the first DCI format.

It should be understood that the sequence numbers of the foregoing processes do not mean an execution sequence in this embodiment. The execution sequence of the processes should be determined according to functions and internal logic of the processes, and should not be construed as any limitation on the implementation processes of this embodiment. For example, step S808 and step S810 may alternatively be: In response to a case in which the first cell enters an inactive state or a dormant state, the network device stops sending the first DCI format to the terminal device, and starts to send the second DCI format to the terminal device. For another example, step S809 and step S811 may alternatively be: In response to the case in which the first cell enters the inactive state or the dormant state, the terminal device stops monitoring the first DCI format, and starts to monitor the second DCI format.

In this embodiment, when a cell in an active state or a non-dormant state in a scheduled cell group is scheduled by using the second DCI format, and when a cell in an inactive state or a dormant state in the scheduled cell group is activated or set to a non-dormant state, data scheduling is performed on the cell. In this case, the first DCI format is used through switching, so that some fields in scheduling may be shared by a plurality of cells. This can reduce signaling overheads. The terminal device and the network device may switch a DCI format based on a status of the first cell. For example, the terminal device may monitor the second DCI format, and stop, in response to the case in which the first cell enters the active state or the non-dormant state, monitoring the second DCI format; and the network device may stop, in response to the case in which the first cell enters the active state or the non-dormant state, sending the second DCI format to the terminal device. On this basis, the terminal device may further start, in response to the case in which the first cell enters the inactive state or the dormant state, to monitor the second DCI format; and the network device may start, in response to the case in which the first cell enters the inactive state or the dormant state, to send the second DCI format to the terminal device. This can reduce signaling overheads for a cell scheduling DCI format and improve cell scheduling flexibility.

The foregoing describes the method embodiments provided in embodiments of this application, and the following describes apparatus embodiments in embodiments of this application.

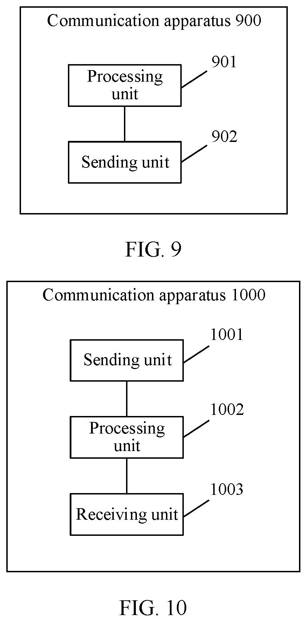

FIG. 9 is a diagram of a structure of a communication apparatus according to an embodiment of this application. The communication apparatus may be a terminal device, or may be an apparatus (for example, a chip, a chip system, or a circuit) in the terminal device. As shown in FIG. 9, the communication apparatus 900 includes at least a processing unit 901 and a sending unit 902.

The processing unit 901 is configured to monitor a first DCI format, where the first DCI format is usable for scheduling data transmission of two or more cells.

The processing unit 901 is further configured to stop, in response to a case in which a first cell enters an inactive state or a dormant state, monitoring the first DCI format, where the first cell is a cell that carries the first DCI format, or the first cell belongs to a first scheduled cell group, where the first scheduled cell group is a set of all cells capable of being scheduled in the first DCI format.

In an implementation, the first cell belongs to the first scheduled cell group; and before stopping monitoring the first DCI format, the processing unit 901 is further configured to determine that a first condition is met, where the first condition includes either or both of the following: there are N or more cells in an inactive state or a dormant state in the first scheduled cell group, where N is a positive integer greater than or equal to 2; or there are K or fewer cells in an active state or a non-dormant state in the first scheduled cell group, where K is a positive integer greater than or equal to 1.

In an implementation, the first cell belongs to the first scheduled cell group; and before stopping monitoring the first DCI format, the processing unit 901 is further configured to: determine that a second condition is met, where the second condition includes any one or more of the following: there is at least one cell in an inactive state or a dormant state in any specific second scheduled cell group; there are N or more cells in an inactive state or a dormant state in any specific second scheduled cell group, where N is a positive integer greater than or equal to 2; or there are K or fewer cells in an active state or a non-dormant state in any second scheduled cell group, where K is a positive integer greater than or equal to 1, where the first DCI format includes a first indicator field, the first indicator field has M values, each value in the M values indicates one second scheduled cell group, each second scheduled cell group includes one or more scheduled cells, and the specific second scheduled cell group is a second scheduled cell group with a largest quantity of scheduled cells in M second scheduled cell groups, where M is a positive integer greater than or equal to 1.

In an implementation, the processing unit 901 is further configured to start to monitor a second DCI format, where one piece of DCI in the second DCI format is for scheduling data transmission of only one cell, the second DCI format is usable for scheduling a second cell, and the second cell belongs to the first scheduled cell group.

In an implementation, the processing unit 901 is further configured to start, in response to a case in which the first cell enters an active state or a non-dormant state, to monitor the first DCI format.

In an implementation, the processing unit 901 is further configured to start, in response to a case in which a third cell enters an active state or a non-dormant state and when it is determined that the first condition is not met, to monitor the first DCI format, where the third cell is a cell in an inactive state or a dormant state in the first scheduled cell group.

In an implementation, the processing unit 901 is further configured to start, in response to a case in which a fourth cell enters an active state or a non-dormant state and when it is determined that the second condition is not met, to monitor the first DCI format, where the fourth cell is a cell in an inactive state or a dormant state in the first scheduled cell group.

In an implementation, the processing unit 901 is further configured to stop monitoring the second DCI format.

In an implementation, the communication apparatus further includes:
the sending unit 902, configured to send indication information to a network device, where the indication information indicates that the terminal device does not support simultaneous monitoring of the first DCI format and the second DCI format.

In an implementation, the first cell belongs to the first scheduled cell group, and the cell that carries the first DCI format is different from a cell that carries the second DCI format.

For more detailed descriptions of the processing unit 901 and the sending unit 902, directly refer to related descriptions of the terminal device in the method embodiments shown in FIG. 2 to FIG. 8. Details are not described herein again.

FIG. 10 is a diagram of a structure of another communication apparatus according to an embodiment of this application. The communication apparatus may be a network device, or may be an apparatus (for example, a chip, a chip system, or a circuit) in the network device. As shown in FIG. 10, the communication apparatus 1000 includes at least a sending unit 1001, a processing unit 1002, and a receiving unit 1003.

The sending unit 1001 is configured to send a first DCI format to a terminal device, where the first DCI format is usable for scheduling data transmission of two or more cells.

The sending unit 1001 is further configured to stop, in response to a case in which a first cell enters an inactive state or a dormant state, sending the first DCI format to the terminal device, where the first cell is a cell that carries the first DCI format, or the first cell belongs to a first scheduled cell group, where the first scheduled cell group is a set of all cells capable of being scheduled in the first DCI format.

In an implementation, the first cell belongs to the first scheduled cell group; and the communication apparatus 1000 further includes the processing unit 1002, configured to: before the sending unit 1001 stops sending the first DCI format to the terminal device, determine that a first condition is met, where the first condition includes either or both of the following: there are N or more cells in an inactive state or a dormant state in the first scheduled cell group, where N is a positive integer greater than or equal to 2; or there are K or fewer cells in an active state or a non-dormant state in the first scheduled cell group, where K is a positive integer greater than or equal to 1.

In an implementation, the first cell belongs to the first scheduled cell group; and the communication apparatus 1000 further includes the processing unit 1002, configured to: before the sending unit 1001 stops sending the first DCI format to the terminal device, determine that a second condition is met, where the second condition includes any one or more of the following: there is at least one cell in an inactive state or a dormant state in any specific second scheduled cell group; there are N or more cells in an inactive state or a dormant state in any specific second scheduled cell group, where N is a positive integer greater than or equal to 2; or there are K or fewer cells in an active state or a non-dormant state in any second scheduled cell group, where K is a positive integer greater than or equal to 1, where the first DCI format includes a first indicator field, the first indicator field has M values, each value in the M values indicates one second scheduled cell group, each second scheduled cell group includes one or more scheduled cells, and the specific second scheduled cell group is a second scheduled cell group with a largest quantity of scheduled cells in M second scheduled cell groups, where M is a positive integer greater than or equal to 1.

In an implementation, the sending unit 1001 is further configured to send a second DCI format to the terminal device, where one piece of DCI in the second DCI format is for scheduling data transmission of only one cell, the second DCI format is usable for scheduling a second cell, and the second cell belongs to the first scheduled cell group.

In an implementation, the sending unit 1001 is further configured to start, in response to a case in which the first cell enters an active state or a non-dormant state, to send the first DCI format to the terminal device.

In an implementation, the sending unit 1001 is further configured to start, in response to a case in which a third cell enters an active state or a non-dormant state and when it is determined that the first condition is not met, to send the first DCI format to the terminal device, where the third cell is a cell in an inactive state or a dormant state in the first scheduled cell group.

In an implementation, the sending unit 1001 is further configured to start, in response to a case in which a fourth cell enters an active state or a non-dormant state and when it is determined that the second condition is not met, to send the first DCI format to the terminal device, where the fourth cell is a cell in an inactive state or a dormant state in the first scheduled cell group.

In an implementation, the sending unit 1001 is further configured to stop sending the second DCI format to the terminal device.

In an implementation, the communication apparatus 1000 further includes:
the receiving unit 1003, configured to receive indication information sent by the terminal device, where the indication information indicates that the terminal device does not support simultaneous monitoring of the first DCI format and the second DCI format.

In an implementation, the first cell belongs to the first scheduled cell group, and the cell that carries the first DCI format is different from a cell that carries the second DCI format.

For more detailed descriptions of the sending unit 1001, the processing unit 1002, and the receiving unit 1003, directly refer to related descriptions of the network device in the method embodiments shown in FIG. 2 to FIG. 8. Details are not described herein again.

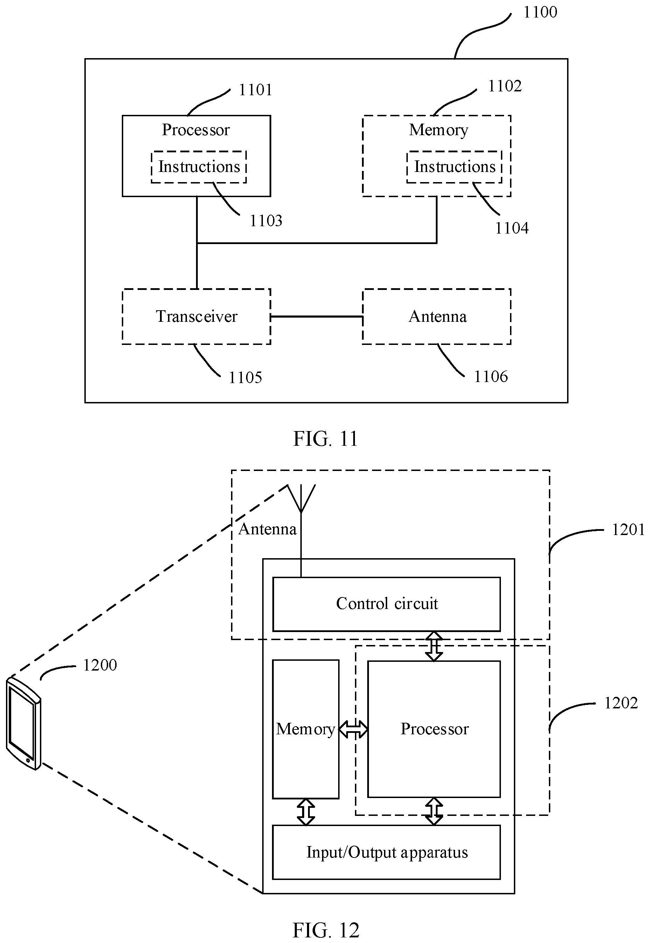

Based on the foregoing network architecture, FIG. 11 is a diagram of a structure of still another communication apparatus according to an embodiment of this application. As shown in FIG. 11, the apparatus 1100 may include one or more processors 1101, and the processor 1101 may also be referred to as a processing unit, and may implement a specific control function. The processor 1101 may be a general-purpose processor, a special-purpose processor, or the like. For example, the processor 1101 may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

In an optional design, the processor 1101 may alternatively store instructions 1103 and/or data, and the instructions 1103 and/or the data may be run by the processor, to enable the apparatus 1100 to perform the methods described in the foregoing method embodiments.

In another optional design, the processor 1101 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separate, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1100 may include a circuit, and the circuit may implement the sending, receiving, or communication function in the foregoing method embodiments.

Optionally, the apparatus 1100 may include one or more memories 1102. The memory 1102 may store instructions 1104 and/or data, and the instructions 1104 and/or the data may be run on the processor, to enable the apparatus 1100 to perform the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1100 may further include a transceiver 1105 and/or an antenna 1106. The processor 1101 may be referred to as the processing unit, and control the apparatus 1100. The transceiver 1105 may be referred to as a transceiver unit, a transceiver machine, a transceiver circuit, a transceiver apparatus, a transceiver module, or the like, and is configured to implement a transceiver function.

Optionally, the apparatus 1100 in this embodiment of this application may be configured to perform the methods described in FIG. 4 to FIG. 6 in embodiments of this application.

In an implementation, the communication apparatus 1100 may be a terminal device, or may be an apparatus (for example, a chip, a chip system, or a circuit) in the terminal device. When computer program instructions stored in the memory 1102 are executed, the processor 1101 is configured to perform an operation performed by the processing unit 901 in the foregoing embodiments, and the transceiver 1105 is configured to perform an operation performed by the sending unit 902 in the foregoing embodiments. The transceiver 1105 is further configured to send information to a communication apparatus other than the communication apparatus. The terminal device or the apparatus in the terminal device may be further configured to perform various methods performed by the terminal device in the method embodiments in FIG. 2 to FIG. 8. Details are not described again.

In an implementation, the communication apparatus 1100 may be a network device, or may be an apparatus (for example, a chip, a chip system, or a circuit) in the network device. When computer program instructions stored in the memory 1102 are executed, the processor 1101 is configured to perform an operation performed by the processing unit 1002 in the foregoing embodiments, and the transceiver 1105 is configured to perform operations performed by the sending unit 1001 and the receiving unit 1003 in the foregoing embodiments. The transceiver 1105 is further configured to receive information from a communication apparatus other than the communication apparatus. The network device or the apparatus in the network device may be further configured to perform various methods performed by the network device in the method embodiments in FIG. 4 to FIG. 6. Details are not described again.

The processor and the transceiver that are described in this application may be implemented on an integrated circuit (integrated circuit, IC), an analog IC, a radio frequency integrated chip (radio frequency interface chip, RFIC), a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), a negative-channel metal oxide semiconductor (negative-channel Metal oxide semiconductor, NMOS), a positive-channel metal oxide semiconductor (positive-channel metal oxide semiconductor, PMOS), a bipolar junction transistor (Bipolar Junction Transistor, BJT), a bipolar CMOS (BiCMOS), silicon germanium (SiGe), and gallium arsenicum (GaAs).

The apparatus described in the foregoing embodiments may be a first communication device or a second communication device. However, a scope of the apparatus described in this application is not limited thereto, and a structure of the apparatus may not be limited to FIG. 11. The apparatus may be an independent device, or may be a part of a larger device. For example, the apparatus may be:
(1) an independent integrated circuit IC, a chip, a chip system, or a subsystem;
(2) a set of one or more ICs, where optionally, the IC set may also include a storage component configured to store data and/or instructions;
(3) an ASIC, for example, a modem (MSM);
(4) a module that may be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

FIG. 12 is a diagram of a structure of a terminal device according to an embodiment of this application. For ease of description, FIG. 12 shows only main components of the terminal device. As shown in FIG. 12, the terminal device 1200 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the terminal is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal, the radio frequency circuit receives a radio frequency signal by using the antenna, further converts the radio frequency signal into a baseband signal, and outputs the baseband signal to the processor. The processor converts the baseband signal into data, and processes the data.

For ease of description, FIG. 12 shows only one memory and one processor. An actual terminal may include a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data, and the central processing unit is mainly configured to: control the entire terminal, execute a software program, and process data of the software program. The processor in FIG. 12 integrates functions of the baseband processor and the central processing unit. Persons skilled in the art may understand that the baseband processor and the central processing unit each may be an independent processor, and are interconnected by using a technology such as a bus. Persons skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1201 of the terminal device 1200, and the processor that has a processing function may be considered as a processing unit 1202 of the terminal device 1200. As shown in FIG. 12, the terminal device 1200 includes the transceiver unit 1201 and the processing unit 1202. The transceiver unit may also be referred to as a transceiver, a transceiver machine, a transceiver apparatus, or the like. Optionally, a component that is in the transceiver unit 1201 and that is configured to implement a receiving function may be considered as a receiving unit, and a component that is in the transceiver unit 1201 and that is configured to implement a sending function may be considered as a sending unit. In other words, the transceiver unit 1201 includes a receiving unit and a sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical location, or may be distributed in a plurality of geographical locations.

In an implementation, the processing unit 1202 is configured to perform an operation performed by the processing unit 901 in the foregoing embodiment, and the transceiver unit 1201 is configured to perform an operation performed by the sending unit 902 in the foregoing embodiment. The terminal device 1200 may be further configured to perform various methods performed by the terminal device in the method embodiments in FIG. 2 to FIG. 8. Details are not described again.

An embodiment of this application further provides a computer-readable storage medium, and the computer-readable storage medium stores a computer program. When the program is executed by a processor, a procedure related to a terminal device in the communication methods provided in the foregoing method embodiments may be implemented.

An embodiment of this application further provides a computer-readable storage medium, and the computer-readable storage medium stores a computer program. When the program is executed by a processor, a procedure related to a network device in the communication methods provided in the foregoing method embodiments may be implemented.

An embodiment of this application further provides a computer program product. When the computer program product runs on a computer or a processor, the computer or the processor is enabled to perform one or more steps in any one of the foregoing communication methods. When each component module of the foregoing device is implemented in a form of a software functional unit and is sold or used as an independent product, the component module may be stored in a computer-readable storage medium.

An embodiment of this application further provides a chip system, including at least one processor and a communication interface. The communication interface is interconnected to the at least one processor by using a line. The at least one processor is configured to run a computer program or instructions to perform some or all steps including any one of the methods recorded in the method embodiments corresponding to FIG. 2 to FIG. 8. The chip system may include a chip, or may include a chip and another discrete component.

An embodiment of this application further discloses a communication system. The system includes a terminal device and a network device. For specific descriptions, refer to the communication methods shown in FIG. 2 to FIG. 8.

It should be understood that the memory in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

It should be further understood that the processor in embodiments of this application may be a CPU, or may be another general-purpose processor, a digital signal processor (digital signal processor, DSP), an ASIC, a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or transistor logic device, or a discrete hardware component, the memory (a storage module) is integrated into the processor.

It should be noted that the memory described in this specification aims to include but is not limited to these memories and any memory of another appropriate type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The steps of the methods in embodiments of this application may be adjusted in terms of a sequence, combined, and deleted based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions set forth in the foregoing embodiments or make equivalent replacements to some technical features thereof, without departing from the scope of the technical solutions of embodiments of this application.

## Claims

1. A communication method, comprising:
monitoring a first downlink control information DCI format, wherein the first DCI format is usable for scheduling data transmission of two or more cells; and
stopping, in response to a case in which a first cell enters an inactive state or a dormant state, monitoring the first DCI format, wherein the first cell is a cell that carries the first DCI format, or the first cell belongs to a first scheduled cell group, wherein the first scheduled cell group is a set of all cells capable of being scheduled in the first DCI format.

2. The method according to claim 1, wherein the first cell belongs to the first scheduled cell group; and before the stopping monitoring the first DCI format, the method further comprises:
determining that a first condition is met, wherein the first condition comprises either or both of the following:
there are N or more cells in an inactive state or a dormant state in the first scheduled cell group, wherein N is a positive integer greater than or equal to 2; or
there are K or fewer cells in an active state or a non-dormant state in the first scheduled cell group, wherein K is a positive integer greater than or equal to 1.

3. The method according to claim 1, wherein the first cell belongs to the first scheduled cell group; and before the stopping monitoring the first DCI format, the method further comprises:
determining that a second condition is met, wherein the second condition comprises any one or more of the following:
there is at least one cell in an inactive state or a dormant state in the any specific second scheduled cell group;
there are N or more cells in an inactive state or a dormant state in the any specific second scheduled cell group, wherein N is a positive integer greater than or equal to 2; or
there are K or fewer cells in an active state or a non-dormant state in the any second scheduled cell group, wherein K is a positive integer greater than or equal to 1, wherein
the first DCI format comprises a first indicator field, the first indicator field has M values, each value in the M values indicates one second scheduled cell group, each second scheduled cell group comprises one or more scheduled cells, and the specific second scheduled cell group is a second scheduled cell group with a largest quantity of scheduled cells in M second scheduled cell groups, wherein M is a positive integer greater than or equal to 1.

4. The method according to any one of claims 1 to 3, wherein the method further comprises:
starting to monitor a second DCI format, wherein one piece of DCI in the second DCI format is for scheduling data transmission of only one cell, the second DCI format is usable for scheduling a second cell, and the second cell belongs to the first scheduled cell group.

5. The method according to claim 1 or 4, wherein the method further comprises:
starting, in response to a case in which the first cell enters an active state or a non-dormant state, to monitor the first DCI format.

6. The method according to claim 2 or 4, wherein the method further comprises:
starting, in response to a case in which a third cell enters an active state or a non-dormant state and when it is determined that the first condition is not met, to monitor the first DCI format, wherein the third cell is a cell in an inactive state or a dormant state in the first scheduled cell group.

7. The method according to claim 3 or 4, wherein the method further comprises:
starting, in response to a case in which a fourth cell enters an active state or a non-dormant state and when it is determined that the second condition is not met, to monitor the first DCI format, wherein the fourth cell is a cell in an inactive state or a dormant state in the first scheduled cell group.

8. The method according to any one of claims 5 to 7, wherein the method further comprises:
stopping monitoring the second DCI format.

9. The method according to any one of claims 1 to 8, wherein the method further comprises:
sending indication information to the network device, wherein the indication information indicates that the terminal device does not support simultaneous monitoring of the first DCI format and the second DCI format.

10. The method according to any one of claims 4 to 9, wherein the first cell belongs to the first scheduled cell group, and the cell that carries the first DCI format is different from a cell that carries the second DCI format.

11. A communication method, comprising:
sending a first downlink control information DCI format to a terminal device, wherein the first DCI format is usable for scheduling data transmission of two or more cells; and
stopping, in response to a case in which a first cell enters an inactive state or a dormant state, sending the first DCI format to the terminal device, wherein the first cell is a cell that carries the first DCI format, or the first cell belongs to a first scheduled cell group, wherein the first scheduled cell group is a set of all cells capable of being scheduled in the first DCI format.

12. The method according to claim 11, wherein the first cell belongs to the first scheduled cell group; and before the stopping sending the first DCI format to the terminal device, the method further comprises:
determining that a first condition is met, wherein the first condition comprises either or both of the following:
there are N or more cells in an inactive state or a dormant state in the first scheduled cell group, wherein N is a positive integer greater than or equal to 2; or
there are K or fewer cells in an active state or a non-dormant state in the first scheduled cell group, wherein K is a positive integer greater than or equal to 1.

13. The method according to claim 11, wherein the first cell belongs to the first scheduled cell group; and before the stopping sending the first DCI format to the terminal device, the method further comprises:
determining that a second condition is met, wherein the second condition comprises any one or more of the following:
there is at least one cell in an inactive state or a dormant state in the any specific second scheduled cell group;
there are N or more cells in an inactive state or a dormant state in the any specific second scheduled cell group, wherein N is a positive integer greater than or equal to 2; or
there are K or fewer cells in an active state or a non-dormant state in the any second scheduled cell group, wherein K is a positive integer greater than or equal to 1, wherein
the first DCI format comprises a first indicator field, the first indicator field has M values, each value in the M values indicates one second scheduled cell group, each second scheduled cell group comprises one or more scheduled cells, and the specific second scheduled cell group is a second scheduled cell group with a largest quantity of scheduled cells in M second scheduled cell groups, wherein M is a positive integer greater than or equal to 1.

14. The method according to any one of claims 11 to 13, wherein the method further comprises:
sending a second DCI format to the terminal device, wherein one piece of DCI in the second DCI format is for scheduling data transmission of only one cell, the second DCI format is usable for scheduling a second cell, and the second cell belongs to the first scheduled cell group.

15. The method according to claim 11 or 14, wherein the method further comprises:
starting, in response to a case in which the first cell enters an active state or a non-dormant state, to send the first DCI format to the terminal device.

16. The method according to claim 12 or 14, wherein the method further comprises:
starting, in response to a case in which a third cell enters an active state or a non-dormant state and when determining that the first condition is not met, to send the first DCI format to the terminal device, wherein the third cell is a cell in an inactive state or a dormant state in the first scheduled cell group.

17. The method according to claim 13 or 14, wherein the method further comprises:
starting, in response to a case in which a fourth cell enters an active state or a non-dormant state and when determining that the second condition is not met, to send the first DCI format to the terminal device, wherein the fourth cell is a cell in an inactive state or a dormant state in the first scheduled cell group.

18. The method according to any one of claims 15 to 17, wherein the method further comprises:
stopping sending the second DCI format to the terminal device.

19. The method according to any one of claims 11 to 18, wherein the method further comprises:
receiving indication information sent by the terminal device, wherein the indication information indicates that the terminal device does not support simultaneous monitoring of the first DCI format and the second DCI format.

20. The method according to any one of claims 14 to 19, wherein the first cell belongs to the first scheduled cell group, and the cell that carries the first DCI format is different from a cell that carries the second DCI format.

21. A communication method, comprising the method according to any one of claims 1 to 10 and the method according to any one of claims 11 to 20.

22. A communication apparatus, comprising a unit configured to perform the method according to any one of claims 1 to 10.

23. A communication apparatus, comprising a unit configured to perform the method according to any one of claims 11 to 20.

24. A communication apparatus, comprising a processor, a memory, an input interface, and an output interface, wherein the input interface is configured to receive information from a communication apparatus other than the communication apparatus, and the output interface is configured to output information to a communication apparatus other than the communication apparatus; and when a computer program stored in the memory is invoked by the processor, the method according to any one of claims 1 to 10 is implemented, or the method according to any one of claims 11 to 20 is implemented.

25. A computer-readable storage medium, wherein the computer-readable storage medium stores a computer program or computer instructions; and when the computer program or the computer instructions are executed by a processor, the method according to any one of claims 1 to 10 is implemented, or the method according to any one of claims 11 to 20 is implemented.

26. A computer program product, wherein the computer program product comprises instructions; and when the instructions are run by a processor, the method according to any one of claims 1 to 10 is implemented, or the method according to any one of claims 11 to 20 is implemented.

27. A chip system, comprising at least one processor, a memory, and an interface circuit, wherein the memory, the interface circuit, and the at least one processor are interconnected through a line, and the at least one memory stores instructions; and when the instructions are executed by the processor, the method according to any one of claims 1 to 10 is implemented, or the method according to any one of claims **11** to 20 is implemented.

28. A communication system, comprising a terminal device and a network device, wherein the terminal device is configured to perform the method according to any one of claims 1 to 10, and the network device is configured to perform the method according to any one of claims **11 to** 20.
